# EUROPEAN PATENT SPECIFICATION

(11) **EP 2 581 500 B1**
(45) Date of publication and mention of the grant of the patent: **15.05.2019**
(21) Application number: 10852914.0
(22) Date of filing: 06.07.2010
(51) Int. Cl.: E02F 9/00, E02F 3/38, E04G 23/08, E02F 3/30, E02F 3/96, F16C 11/04

(54) **DEVICE FOR CONNECTING TWO MEMBERS**
VORRICHTUNG ZUR VERBINDUNG ZWEIER ELEMENTE
DISPOSITIF POUR RELIER DEUX ÉLÉMENTS

(30) Priority: 10.06.2010 JP 2010133111
(43) Date of publication of application: 17.04.2013
(73) Proprietor: Hitachi Construction Machinery Co., Ltd., Bunkyo-ku Tokyo 112-0004 (JP)
(72) Inventor: OGASAWARA, Manabu, Tsuchiura-shi Ibaraki 300-0013 (JP); OMOTERA, Kazumasa, Tsuchiura-shi Ibaraki 300-0013 (JP); NABESHIMA, Tooru, Tsuchiura-shi Ibaraki 300-0013 (JP); KONDOU, Keishi, Tsuchiura-shi Ibaraki 300-0013 (JP); KOUDA, Junichi, Tsuchiura-shi Ibaraki 300-0013 (JP)
(74) Representative: MERH-IP Matias Erny Reichl Hoffmann Patentanwälte PartG mbB
(86) International application number: PCT/JP2010/061452
(87) International publication number: WO 2011/155079

(56) References cited:
- EP-A2- 2 206 837
- EP-A2- 2 233 643
- JP-A- H08 158 401
- JP-A- 2000 065 037
- JP-A- 2004 068 958
- JP-A- 2005 249 185
- JP-U- 57 018 051
- JP-U- 59 035 453

## Description

### TECHNICAL FIELD

The present invention relates to a device for connecting two members which is suitably used in connecting together two mutually rotating members, such as a revolving frame and a boom, and a boom and an arm, of a hydraulic excavator, for example.

### BACKGROUND ART

Generally, in a case where a structure having a large ground height such as a high-rise building is demolished, a hydraulic excavator equipped with a working mechanism for demolition work is suitably used. This working mechanism for demolition work generally has a plurality of booms, which is called a multi-boom, and an arm is mounted to a distal end side of an uppermost-stage boom among the booms, a working tool such as a crusher, a grapple, or the like being attached to a distal end side of the arm.

The multi-boom for the demolition work is configured into a desired length by mutually connecting the plurality of booms, and the booms are arranged to be connected together by using a device for connecting two members. In addition, two mutually rotating members, such as a lowermost-stage boom of the multi-boom and a boom bracket of the revolving frame, an uppermost-stage multi-boom and the arm, and the arm and the working mechanism, are also connected by using the device for connecting two members.

Here, the device for connecting two members for connecting two booms for making up the multi-boom connects by means of left and right connecting pins, left and right brackets provided on one boom and left and right brackets provided on the other boom.

In this case, one end sides of left and right links are respectively pin-connected rotatably to the left and right connecting pins, and the other end sides of these left and right links are respectively pin-connected rotatably to support members, which are respectively provided projectingly on the brackets, by using fulcrum pins. Further, both end portions of a hydraulic cylinder are connected to longitudinally intermediate portions of the left and right links, and the arrangement provided is such that when this hydraulic cylinder is extended and contracted, the one end sides of the links move in the left and right direction about the fulcrum pins, thereby allowing the connecting pins to be inserted and withdrawn with respect to the brackets (Patent Document 1: JP 2005-249185 A).
Further, EP 2 233 643 A2 describes a two-member connecting device with left and right first brackets with pin insertion holes, wherein connecting pins can be connected to the brackets by inserting the connecting pins into the inserting holes by using a inserting/withdrawing mechanism. Additionally, the two-member connecting device comprises upper/lower centering members for aligning an axis of the upper/lower connecting pins with an axis of upper/lower pin insertion holes.

EP 2 206 837 A2 describes a two member connecting device, wherein a inserting/withdrawing mechanism includes a hydraulic cylinder which is disposed in such a manner as to be spaced apart from left and right connecting pins so as to be capable of extending and contracting in the same direction as the axis of the left and right connecting pins.

### SUMMARY OF THE INVENTION

However, with the above-described conventional art, the connecting pins are merely inserted and withdrawn with respect to the brackets of one boom and the brackets of the other boom, and a mechanism for restricting the rotation of the connecting pins connecting the brackets is not provided.

For this reason, in the case where two mutually rotating members, such as the a boom bracket of the revolving frame and a foot portion of a boom, are connected by the device for connecting two members in accordance with the conventional art, there is a problem in that the connecting pins unfavorably rotate
between the boom bracket and the foot portion of the boom when the boom rotates relative to the boom bracket, disadvantageously leading to early wear of the connecting pins.

In view of the above-discussed problems with the conventional art, it is an object of the present invention to provide a device for connecting two members which makes it possible to restrict the rotation of the connecting pins connecting two mutually rotating members to thereby prolong the life of these connecting pins.
(1) To solve the above-described problem, the present invention is applied to a device for connecting two members as defined by claim 1.

The characteristic of the construction adopted in the present invention lies in that left and right connecting pin rotation restricting mechanisms for restricting the left connecting pin from rotating in a state of being inserted in the left first pin insertion hole and the left second pin insertion hole and for restricting the right connecting pin from rotating in a state of being inserted in the right first pin insertion hole and the right second pin insertion hole are respectively provided between the left and right first brackets and the left and right connecting pins.

With this arrangement, the restriction of rotation of the left connecting pin with respect to the left first bracket can be effected by the left connecting pin rotation restricting mechanism, and the restriction of rotation of the right connecting pin with respect to the right first bracket can be effected by the right connecting pin rotation restricting mechanism. In consequence, in a state in which the left first bracket and the left second bracket are connected by the left connecting pin, and the right first bracket and the right second bracket are connected by the right connecting pin, even if, for example, the second member is rotated with respect to the first member, it is possible to restrict the left and right connecting pins from rotating between the left and right first brackets and the left and right second brackets. As a result, it is possible to suppress early wear of the left and right connecting pins and prolong the life of these connecting pins, thereby making it possible to enhance the reliability of the device for connecting two members.

(2) According to the present invention, the left and right connecting pin rotation restricting mechanisms are constituted by pin side engaging members which are respectively provided on the left and right connecting pins by being located on sides of those opposing surfaces of the left and right first brackets which oppose each other, the pin side engaging members extending in a direction of being spaced apart from the axis of the connecting pins; and bracket side engaging members which are respectively provided on the opposing surfaces of the left and right first brackets at a position spaced apart from the axis of the connecting pins, and with which the pin side engaging members are engaged when the connecting pins are each inserted into the first pin insertion hole and the second pin insertion hole.

With this arrangement, when the left connecting pin is inserted into the left first pin insertion hole and the left second pin insertion hole, the pin side engaging member provided on the left connecting pin is engaged with the bracket side engaging member provided on the opposing surface of the left first bracket, thereby making it possible to prevent the left connecting pin from rotating with respect to the left first bracket. Meanwhile, when the right connecting pin is inserted into the right first pin insertion hole and the right second pin insertion hole, the pin side engaging member provided on the right connecting pin is engaged with the bracket side engaging member provided on the opposing surface of the right first bracket, thereby making it possible to prevent the right connecting pin from rotating with respect to the right first bracket.

(3) In this case, according to the present invention, the pin side engaging members may be projecting members which project in the direction of being spaced apart from the axis of the connecting pins, and the bracket side engaging members may be configured as blocks each having a recessed groove portion for inserting a distal end portion of the pin side engaging member thereinto.

With this construction, the distal end portion of the pin side engaging member projecting in the direction of being spaced apart from the axis of the left connecting pin is inserted into the recessed groove portion of the bracket side engaging member provided on the opposing surface of the left first bracket, thereby allowing the left connecting pin to be restricted from rotating about its axis. Meanwhile, the distal end portion of the pin side engaging member projecting in the direction of being spaced apart from the axis of the right connecting pin is inserted into the recessed groove portion of the bracket side engaging member provided on the opposing surface of the right first bracket, thereby allowing the right connecting pin to be restricted from rotating about its axis.

(4) In addition, in the case of the item (3) above, a tapered guide surface for guiding the distal end portion of each of the pin side engaging members into the recessed groove portion when each of the connecting pins is inserted into the first pin insertion holes and the second pin insertion holes is preferably arranged to be provided on at least one side of the distal end portion of the pin side engaging member and the recessed groove portion.

With this construction, when the left connecting pin is inserted into the left first pin insertion hole and the left second pin insertion hole, the distal end portion of the pin side engaging member can be reliably guided into the recessed groove portion by the tapered guide surface. Further, when the right connecting pin is inserted into the right first pin insertion hole and the right second pin insertion hole, the distal end portion of the pin side engaging member can be reliably guided into the recessed groove portion by the tapered guide surface.

(5) In addition, according to the present invention, the pin inserting/withdrawing mechanism includes a hydraulic cylinder disposed at a position spaced apart from a position of the axis of the left and right connecting pins so as to be capable of extending and contracting; a floating link disposed at a position spaced apart in a same direction as the hydraulic cylinder from the position of the axis of the left and right connecting pins and in a floating state of being movable at least in a direction perpendicular to the axis of the left and right connecting pins; a left link for rotatably connecting the left connecting pin and the hydraulic cylinder through the floating link, respectively; and a right link for rotatably connecting the right connecting pin and the hydraulic cylinder through the floating link, respectively, and the pin inserting/withdrawing mechanism is adapted to connect or disconnect the left and right first brackets and the second brackets by the left and right connecting pins through the left and right links in correspondence with an extended state or a contracted state of the hydraulic cylinder.

With this arrangement, if the hydraulic cylinder is extended or contracted, the left and right links rotate in the left and right direction by using the floating link as a fulcrum, and the left and right connecting pins connected to these left and right links move in the left and right direction, thereby making it possible to insert and withdraw the left and right connecting pins with respect to the first and second brackets. Thus, since the operation of inserting or withdrawing the connecting pins with respect to the first and second brackets can be effected easily by using the hydraulic cylinder, it is possible to enhance the operational efficiency at the time of connecting or disconnecting the first brackets and the second brackets. In addition, since it is unnecessary to effect the operation of inserting or withdrawing the connecting pins with respect to the first and second brackets by a manual operation, the connecting pin inserting and withdrawing operation can be effected speedily and safely.

(6) Further, in the case of the item (5) above, a stopper against which the left connecting pin abuts at a position where the left connecting pin has been withdrawn from the left second pin insertion hole and against which the right connecting pin abuts at a position where the right connecting pin has been withdrawn from the right second pin insertion hole is preferably arranged to be provided between the left and right first brackets.

With this construction, the left connecting pin abuts against the stopper at a position where the left connecting pin has been withdrawn from the left second pin insertion hole, so that the left connecting pin can be prevented from coming off the left first pin insertion hole. Meanwhile, the right connecting pin also abuts against the stopper at a position where the right connecting pin has been withdrawn from the right second pin insertion hole, so that the right connecting pin can be prevented from coming off the right first pin insertion hole. In consequence, the pin inserting/withdrawing mechanism can be held between the left and right first members in the state in which the left connecting pin is inserted in the left first pin insertion hole and the right connecting pin is inserted in the right first pin insertion hole.

### BRIEF DESCRIPTION OF THE DRAWINGS

Fig. 1 is a front view illustrating a multi-boom type hydraulic excavator to which is applied a device for connecting two members in accordance with an embodiment of the present invention in a state of a boom being erected.
Fig. 2 is a front view illustrating a state in which a lower boom and boom cylinders are extended forwardly with respect to a revolving frame by contracting the boom cylinders.
Fig. 3 is a plan view, taken from the direction of arrows III - III in Fig. 2, of the revolving frame, the lower boom, the boom cylinders, and the like.
Fig. 4 is a cross-sectional view, taken from the direction of arrows IV - IV in Fig. 3, of a device for connecting two members in accordance with a first embodiment for connecting the revolving frame and the lower boom and a device for connecting two members in accordance with a second embodiment for connecting the revolving frame and the boom cylinders.
Fig. 5 is an enlarged cross-sectional view illustrating in enlarged form the device for connecting two members in accordance with the first embodiment shown in Fig. 4.
Fig. 6 is a cross-sectional view, taken from the direction of arrows VI - VI in Fig. 5, of the device for connecting two members in accordance with the first embodiment.
Fig. 7 is a perspective view illustrating the device for connecting two members in accordance with the first embodiment.
Fig. 8 is a cross-sectional view similar to Fig. 6 and illustrating a state in which left and right connecting pins have been withdrawn from left and right boom foot portions.
Fig. 9 is a cross-sectional view similar to Fig. 6 and illustrating a state in which the connecting pins are in the course of being inserted into left and right boom brackets and the left and right boom foot portions.
Fig. 10 is a perspective view illustrating a pin side engaging member and a recessed groove portion of a bracket side engaging member in a state in which the two members are disengaged from each other.
Fig. 11 is a perspective view illustrating the pin side engaging member and the recessed groove portion of the bracket side engaging member in a state in which the two members are engaged from each other.
Fig. 12 is a cross-sectional view, taken from the direction of arrows XII -XII in Fig. 10, of the pin side engaging member and the recessed groove portion of the bracket side engaging member.
Fig. 13 is an enlarged cross-sectional view illustrating in enlarged form the device for connecting two members in accordance with the second embodiment shown in Fig. 4.
Fig. 14 is a cross-sectional view, taken from the direction of arrows XIV - XIV in Fig. 13, of the device for connecting two members in accordance with the second embodiment.
Fig. 15 is a cross-sectional view similar to Fig. 14 and illustrating a state in which the left and right connecting pins have been withdrawn from left and right cylinder mounting eyes.
Fig. 16 is a perspective view similar to Fig. 10 and illustrating a modification of the recessed groove portion of the bracket side engaging member.

### MODE FOR CARRYING OUT THE INVENTION

Hereinafter, the embodiments of a device for connecting two members in accordance with the invention will be in detail explained with reference to the accompanying drawings by taking a case in which the device for connecting two members is applied to a multi-boom type hydraulic excavator.

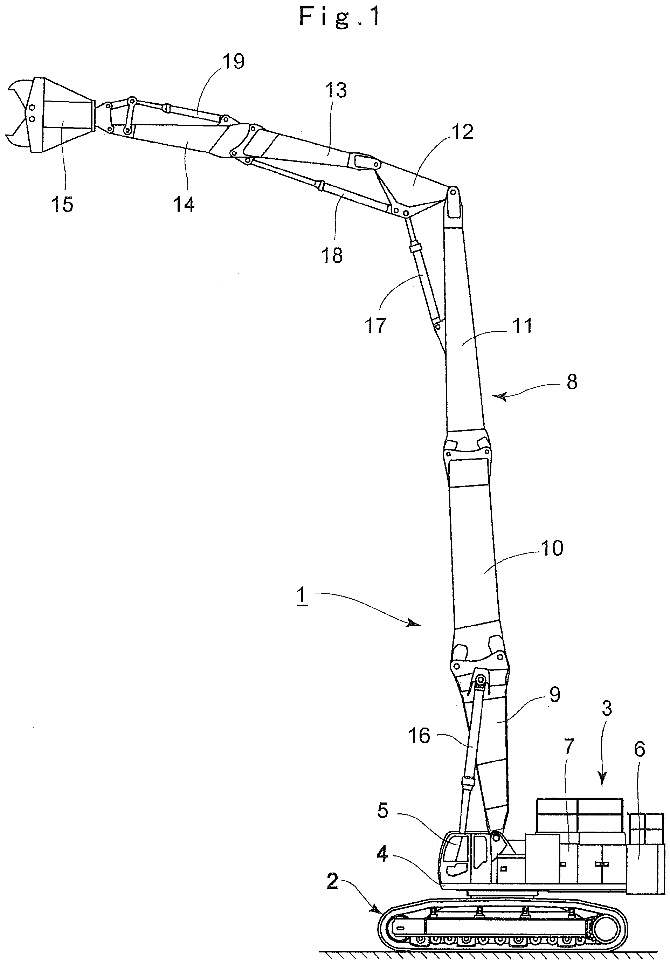

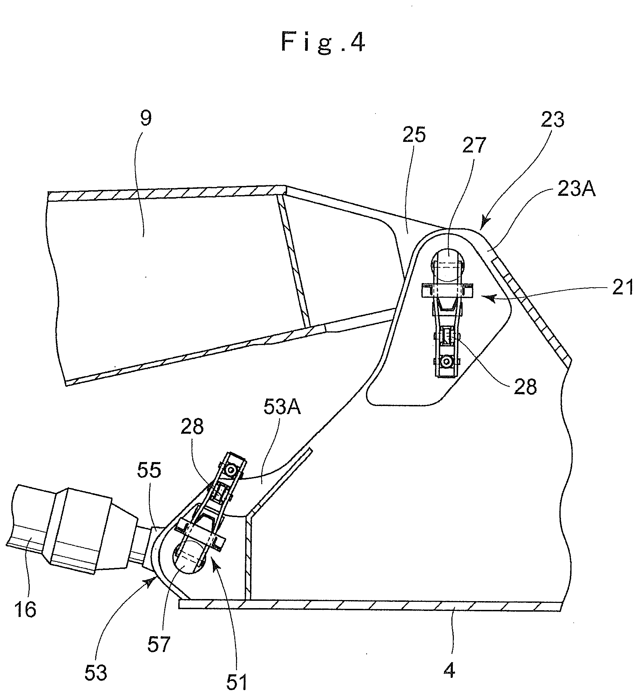

Figs. 1 to 12 show a first embodiment of the device for connecting two members in accordance with the invention. In this embodiment, a device for connecting two members for connecting a revolving frame of the hydraulic excavator and a lower boom of a multi-boom is shown by way of example.

In the drawings, designated at 1 is a hydraulic excavator as a typical example of construction machines, and the hydraulic excavator 1 is largely constituted by an automotive crawler-type lower traveling structure 2, an upper revolving structure 3 mounted rotatably on top of the lower traveling structure 2, and a blow-described multi-boom type working mechanism 8 provided tiltably on the front side of the upper revolving structure 3. This hydraulic excavator 1 is suitably used for demolishing a structure having a large ground height such as a high-rise building.

Here, the upper revolving structure 3 is largely constituted by a revolving frame 4 serving as a base, a cab 5 disposed on the front left end side of the revolving frame 4 to define an operating room, a counterweight 6 disposed on a rear end side of the revolving frame 4, and a housing cover 7 disposed on the front side of the counterweight 6 and accommodating mounted equipment (not shown) such as an engine or a hydraulic pump. A left boom bracket 22 and a right boom bracket 23 which will be described hereinafter are integrally provided on a front portion side of the revolving frame 4, and a lower boom 9 of the below-described working mechanism 8 is arranged to be rotatably connected to these left and right boom brackets 22 and 23.

Designated at 8 is the multi-boom type working mechanism provided liftably on a front end side of the revolving frame 4, and the working mechanism 8 is largely constituted by a multi-boom formed of the lower boom 9, an extension boom 10, and an upper boom 11; a middle arm 12 mounted rotatably on a distal end side of the upper boom 11; an arm mounted rotatably on a distal end side of the middle arm 12 and formed of a lower arm 13 and an upper arm 14; and a crusher 15 serving as a working tool mounted rotatably on a distal end side of the upper arm 14. Left and right boom cylinders 16 are provided between the revolving frame 4 and the lower boom 9, and a middle arm cylinder 17 is provided between the upper boom 11 and the middle arm 12. An arm cylinder 18 is provided between the middle arm 12 and the lower arm 13, and a working tools cylinder 19 is provided between the upper arm 14 and the crusher 15.

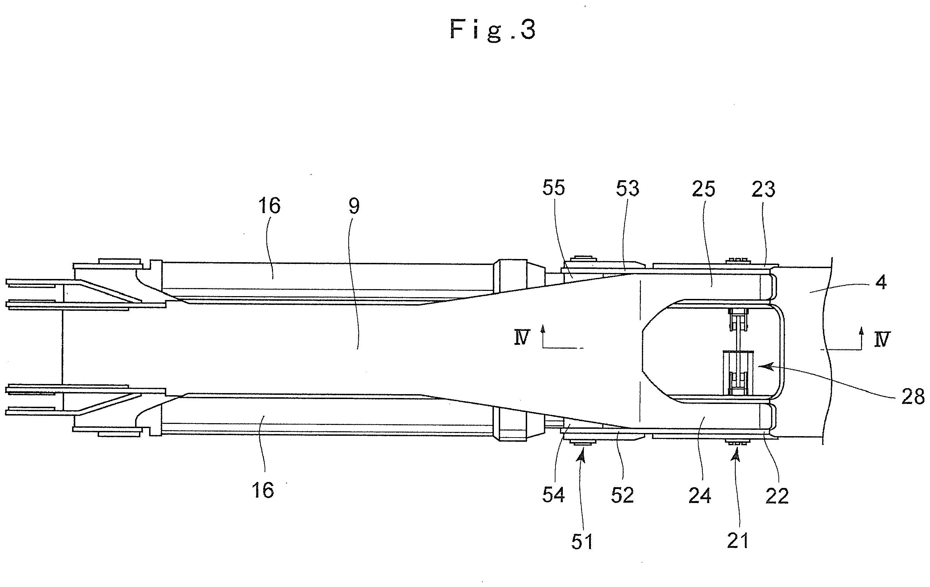

Here, the lower boom 9 is formed by a rectangular tubular body having a rectangular cross-sectional shape as a whole, and below-described left and right boom foot portions 24 and 25 are provided on a proximal end side of the lower boom 9 in such a manner as to be branched off into a bifurcated shape, as shown in Fig. 3. The left and right boom foot portions 24 and 25 provided on the lower boom 9 are arranged to be rotatably connected to the left and right boom brackets 22 and 23 of the revolving frame 4 by using below-described left and right connecting pins 26 and 27.

Incidentally, at the time of transporting the hydraulic excavator 1 to a work site, the working mechanism 8, for example, is removed from the upper revolving structure 3, and the working mechanism 8 and the vehicle body consisting of the lower traveling structure 2 and the upper revolving structure 3 are loaded onto transport vehicles and are separately transported to the work site. At the time of remounting the working mechanism 8 to the upper revolving structure 3 at the work site, the arrangement adopted is such that, first, in a state in which the lower boom 9 of the working mechanism 8 is lifted up by a hydraulic crane (not shown), the proximal end side of the lower boom 9 is connected to the revolving frame 4 by using a below-described device for connecting two members 21. Namely, in this embodiment, a case is shown by way of example in which the revolving frame 4 of the upper revolving structure 3 is applied as a first member, and the lower boom 9 of the working mechanism 8 is applied as a second member.

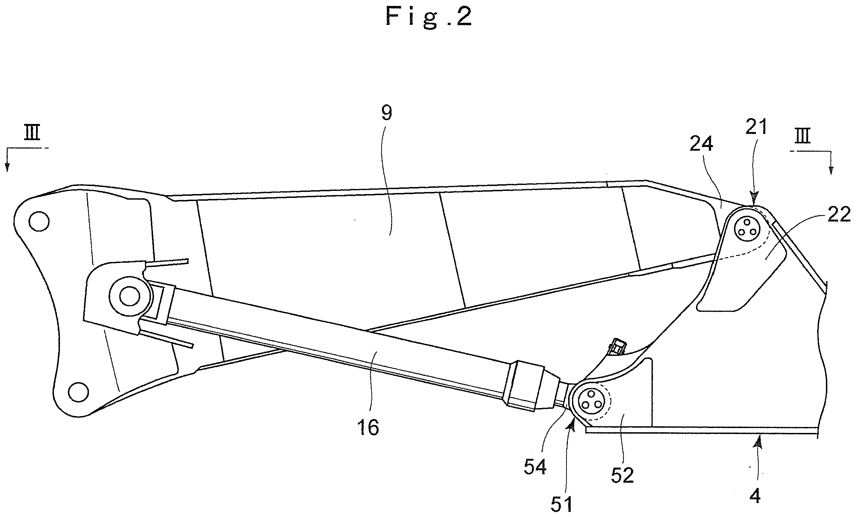

Next, referring to Figs. 2 to 12, the device for connecting two members 21 in accordance with a first embodiment will be explained in detail.

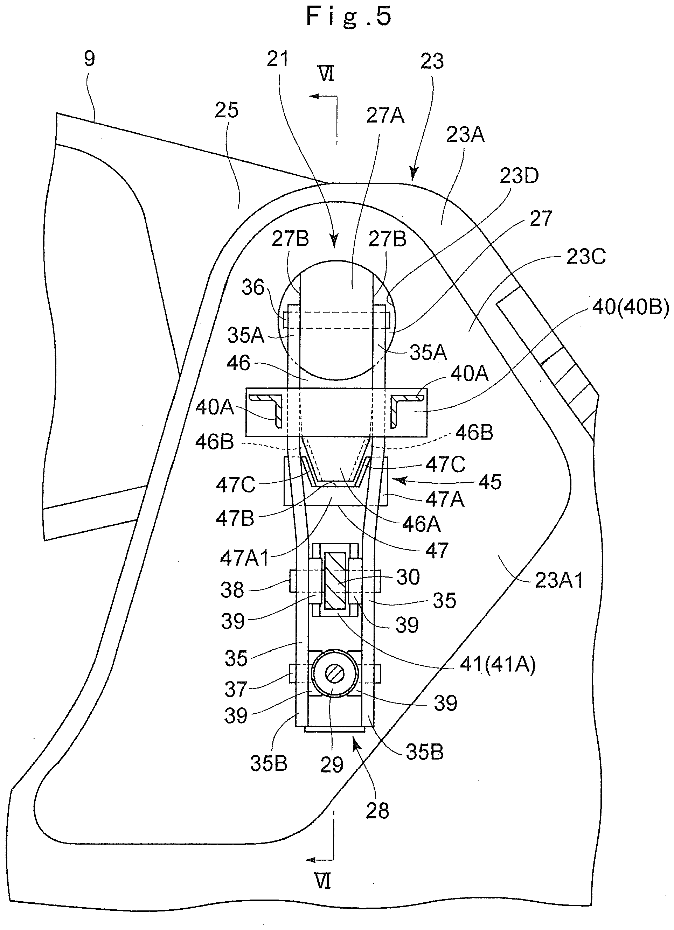

Namely, designated at 21 is the device for connecting two members for connecting the revolving frame 4 (first member) and the lower boom 9 (second member) . As shown in Figs. 5 to 7, this device for connecting two members 21 is comprised of, among others, the left and right boom brackets 22 and 23; left and right first pin insertion holes 22D and 23D; the left and right boom foot portions 24 and 25; left and right second pin insertion holes 24A and 25A; the left and right connecting pins 26 and 27; a pin inserting/withdrawing mechanism 28; and left and right connecting pin rotation restricting mechanisms 42 and 45.

Designated at 22 is the left boom bracket provided on the front end side of the revolving frame 4 and serving as a left first bracket, and the left boom bracket 22 is constituted by a front side portion of a left vertical plate erected on a bottom plate (not shown) of the revolving frame 4.

Here, the left boom bracket 22 is constituted by a left inner boom bracket 22A and a left outer boom bracket 22B which are opposed to each other in the left and right direction at a fixed interval. The left inner boom bracket 22A and the left outer boom bracket 22B are formed by steel plates to which reinforcing plates 22A1 and 22B1 are respectively secured. A below-described bracket side engaging member 44 is provided on that opposing surface 22C of the left inner boom bracket 22A which opposes a below-described right inner boom bracket 23A.

The below-described left boom foot portion 24 is arranged to be disposed between the left inner boom bracket 22A and the left outer boom bracket 22B. The left first pin insertion holes 22D, which penetrate in the left and right direction, are respectively bored in the left inner boom bracket 22A and the left outer boom bracket 22B, and the below-described left connecting pin 26 is arranged to be inserted in these left first pin insertion holes 22D in such a manner as to be capable of being inserted and withdrawn.

Designated at 23 is the right boom bracket provided on the front end side of the revolving frame 4 together with the left boom bracket 22 and serving as a right first bracket, and the right boom bracket 23 is constituted by a front side portion of a right vertical plate erected on the bottom plate (not shown) of the revolving frame 4.

Here, the right boom bracket 23 is constituted by a right inner boom bracket 23A and a right outer boom bracket 23B which are opposed to each other in the left and right direction at a fixed interval. The right inner boom bracket 23A and the right outer boom bracket 23B are formed by steel plates to which reinforcing plates 23A1 and 23B1 are respectively secured. A below-described bracket side engaging member 47 is provided on that opposing surface 23C of the right inner boom bracket 23A which opposes the left inner boom bracket 22A.

The below-described right boom foot portion 25 is arranged to be disposed between the right inner boom bracket 23A and the right outer boom bracket 23B. The right first pin insertion holes 23D, which penetrate in the left and right direction, are respectively bored in the right inner boom bracket 23A and the right outer boom bracket 23B, and the below-described right connecting pin 27 is arranged to be inserted in these right first pin insertion holes 23D in such a manner as to be capable of being inserted and withdrawn.

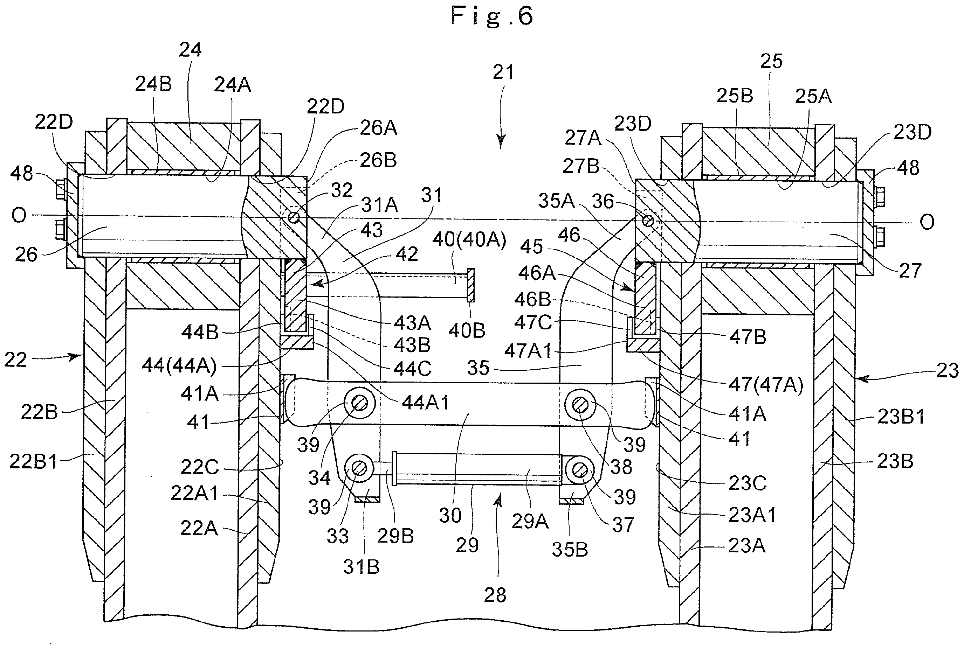

In this instance, the left first pin insertion holes 22D bored in the left inner boom bracket 22A and the left outer boom bracket 22B and the right first pin insertion holes 23D bored in the right inner boom bracket 23A and the right outer boom bracket 23B are disposed on an identical axis O - O (see Fig. 6) .

Designated at 24 is the left boom foot portion provided on the proximal end side of the lower boom 9 and serving as a left second bracket. The left boom foot portion 24 is formed as a thick-walled cylindrical boss and is disposed in such a manner as to face the left boom bracket 22 in the left and right direction and to be sandwiched between the left inner boom bracket 22A and the left outer boom bracket 22B. The left second pin insertion hole 24A is bored in the left boom foot portion 24 at a position corresponding to the left first pin insertion hole 22D of the left boom bracket 22. Further, a cylindrical left bush 24B is insertingly fitted in the left second pin insertion hole 24A.

Designated at 25 is the right boom foot portion provided on the proximal end side of the lower boom 9 together with the left boom foot portion 24 and serving as a right second bracket. The right boom foot portion 25 is formed as a thick-walled cylindrical boss and is disposed in such a manner as to face the right boom bracket 23 in the left and right direction and to be sandwiched between the right inner boom bracket 23A and the right outer boom bracket 23B. The right second pin insertion hole 25A is bored in the right boom foot portion 25 at a position corresponding to the right first pin insertion hole 23D of the right boom bracket 23. In addition, a cylindrical right bush 25B is insertingly fitted in the right second pin insertion hole 25A.

Here, as shown in Fig. 6, the arrangement provided is such that the left second pin insertion hole 24A provided in the left boom foot portion 24 and the right second pin insertion hole 25A provided in the right boom foot portion 25 can be aligned with the left first pin insertion hole 22D of the left boom bracket 22 and the right first pin insertion hole 23D of the right boom bracket 23 on the identical axis O - O.

Indicated at 26 is the left connecting pin for connecting the left boom bracket 22 and the left boom foot portion 24, and the left connecting pin 26 is disposed on the same axis as the axis O - O of the left and right first pin insertion holes 22D and 23D and the left and right second pin insertion holes 24A and 25A. Here, the left connecting pin 26 is formed in a cylindrical shape extending in the left and right direction, and is withdrawably inserted in the left first pin insertion hole 22D of the left boom bracket 22 and in the left bush 24B insertingly fitted in the left second pin insertion hole 24A of the left boom foot portion 24. At that end portion 26A of the aforementioned left connecting pin 26 which is located on the opposing surface 22C side of the left boom bracket 22, a link mounting portion 26B, to which a below-described left link 31 is mounted, is formed, and a below-described pin side engaging member 43 is secured thereto.

Indicated at 27 is the right connecting pin for connecting the right boom bracket 23 and the right boom foot portion 25, and the right connecting pin 27 is disposed on the same axis as the axis O - O of the left and right first pin insertion holes 22D and 23D and the left and right second pin insertion holes 24A and 25A. Here, the right connecting pin 27 is formed in a cylindrical shape extending in the left and right direction, and is withdrawably inserted in the left first pin insertion hole 23D of the right boom bracket 23 and in the right bush 25B insertingly fitted in the right second pin insertion hole 25A of the right boom foot portion 25. At that end portion 27A of the aforementioned right connecting pin 27 which is located on the opposing surface 23C side of the right boom bracket 23, a link mounting portion 27B to which a below-described right link 35 is mounted, is formed, and a below-described pin side engaging member 46 is secured thereto.

Next, the pin inserting/withdrawing mechanism 28 whereby the left connecting pin 26 is inserted into and withdrawn from the left boom bracket 22 and the left boom foot portion 24, and the right connecting pin 27 is inserted into and withdrawn from the right boom bracket 23 and the right boom foot portion 25 will be explained.

Namely, designated at 28 is the pin inserting/withdrawing mechanism which is provided between the left boom bracket 22 and the right boom bracket 23. This pin inserting/withdrawing mechanism 28 is for inserting and withdrawing the left connecting pin 26 with respect to the left first pin insertion hole 22D of the left boom bracket 22 and the left second pin insertion hole 24A of the left boom foot portion 24, and for inserting and withdrawing the right connecting pin 27 with respect to the right first pin insertion hole 23D of the right boom bracket 23 and the right second pin insertion hole 25A of the right boom foot portion 25. Further, the pin inserting/withdrawing mechanism 28 is constituted by a hydraulic cylinder 29, a floating link 30, the left link 31, the right link 35, and the like which will be described below.

Indicated at 29 is the hydraulic cylinder for constituting the pin inserting/withdrawing mechanism 28, and this hydraulic cylinder 29 is constituted by a tube 29A, a piston (not shown), and a rod 29B having a proximal end side fixed to the piston and a distal end side projecting from the tube 29A. This hydraulic cylinder 29 is disposed at a position vertically spaced apart from the left and right connecting pins 26 and 27 and extends in the left and right direction, and is for extending and contracting the rod 29B in the left and right direction as pressure oil is supplied and discharged from a hydraulic source (not shown).

Indicated at 30 is the floating link which is disposed adjacent to the hydraulic cylinder 29, and the floating link 30 extends in the left and right direction in parallel with the hydraulic cylinder 29. This floating link 30 is formed in the shape of a rectangular flat plate extending in the left and right direction, and the lengthwise dimension in the left and right direction of the floating link 30 is set to be slightly smaller than the interval between the opposing surface 22C of the left inner boom bracket 22A and the opposing surface 23C of the right inner boom bracket 23A.

Here, the floating link 30 is mounted on neither one of the left and right boom brackets 22 and 23, and is set in a floating state with respect to these left and right boom brackets 22 and 23. This floating link 30 is disposed between the left and right connecting pins 26 and 27 and the hydraulic cylinder 29, and constitutes a fulcrum for causing the left and right connecting pins 26 and 27 connected to the below-described left and right links 31 and 35 to move in the left and right direction in correspondence with the extension and contraction of the hydraulic cylinder 29.

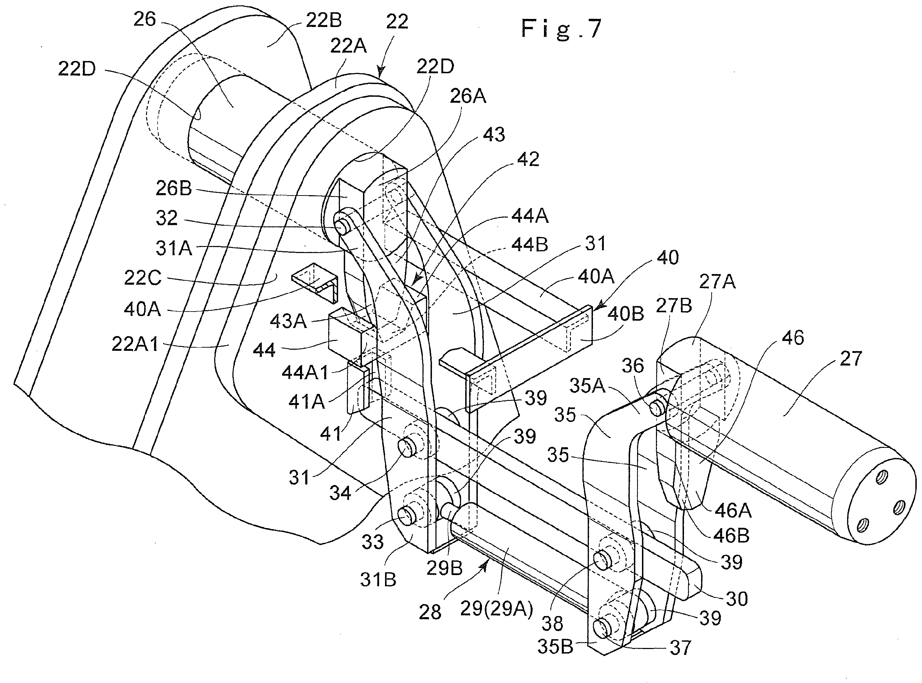

Indicated at 31 is the left link for connecting the left connecting pin 26 and the hydraulic cylinder 29 through the floating link 30, and the left link 31 is formed by two plates extending in the vertical direction between the left connecting pin 26 and the hydraulic cylinder 29 (see Fig. 7). One end side 31A of the left link 31 is rotatably connected to the link mounting portion 26B of the left connecting pin 26 by using a pin 32, while another end side 31B of the left link 31 is rotatably connected to a distal end side of the rod 29B of the hydraulic cylinder 29 by using a pin 33. In addition, a longitudinally intermediate portion of the left link 31 is rotatably connected to one side (left side) in the left and right direction of the floating link 30 by using a pin 34.

Indicated at 35 is the right link for connecting the right connecting pin 27 and the hydraulic cylinder 29 through the floating link 30, and the right link 35 is formed by two plates extending in the vertical direction between the right connecting pin 27 and the hydraulic cylinder 29. One end side 35A of the right link 35 is rotatably connected to the link mounting portion 27B of the right connecting pin 27 by using a pin 36, while another end side 35B of the right link 35 is rotatably connected to a bottom side of the tube 29A of the hydraulic cylinder 29 by using a pin 37. In addition, a longitudinally intermediate portion of the right link 35 is rotatably connected to the other side (right side) in the left and right direction of the floating link 30 by using a pin 38.

In this state, slight gaps are respectively formed between a left end portion of the floating link 30 and the opposing surface 22C of the left inner boom bracket 22A and between a right end portion of the floating link 30 and the opposing surface 23C of the right inner boom bracket 23A. Meanwhile, the arrangement provided is such that floating link 30 is able to move between the left inner boom bracket 22A and the right inner boom bracket 23A in correspondence with the extension and contraction of the hydraulic cylinder 29. It should be noted that two spacers 39 are disposed between the floating link 30 and the left link 31 and between the floating link 30 and the right link 35, respectively, in such a manner as to sandwich the floating link 30.

In consequence, if the hydraulic cylinder 29 is extended or contracted, the one end side 31A of the left link 31 pivotally moves in the left and right direction by using as a fulcrum the portion (a position of pin 34) where the left link 31 is connected to the floating link 30, and the one end side 35A of the right link 35 pivotally moves in the left and right direction by using as a fulcrum the portion (a position of pin 38) where the right link 35 is connected to the floating link 30.

Accordingly, when the hydraulic cylinder 29 is contracted, as shown in Fig. 6, the left connecting pin 26 is inserted into the left first pin insertion hole 22D of the left boom bracket 22 and the left second pin insertion hole 24A of the left boom foot portion 24, and the right connecting pin 27 is inserted into the right first pin insertion hole 23D of the right boom bracket 23 and the right second pin insertion hole 25A of the right boom foot portion 25. In consequence, the arrangement provided is such that the left and right boom brackets 22 and 23 and the left and right boom foot portions 24 and 25 can be connected.

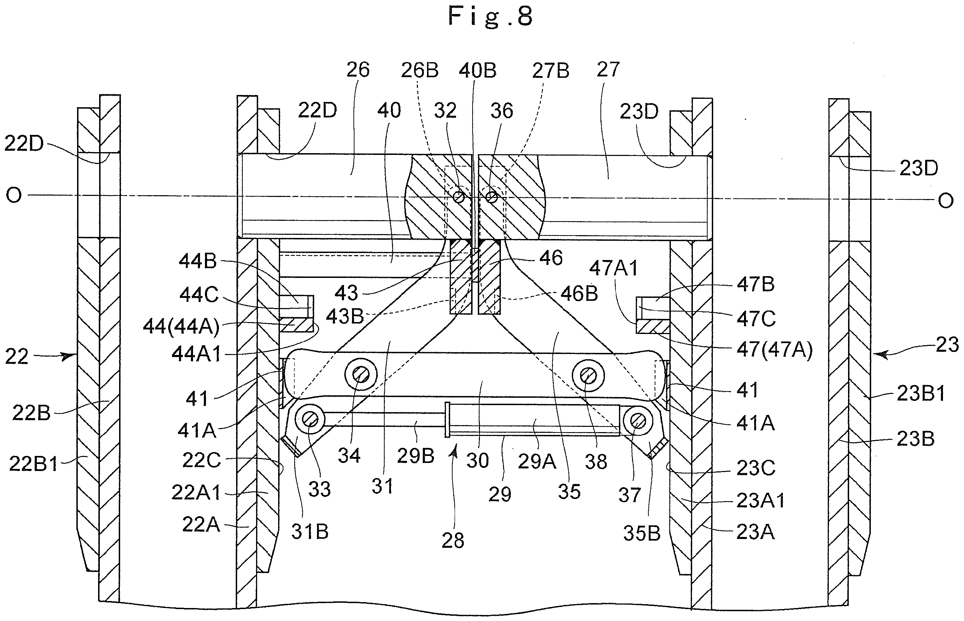

Meanwhile, when the hydraulic cylinder 29 is extended, as shown in Fig. 8, the left connecting pin 26 is withdrawn from the left second pin insertion hole 24A of the left boom foot portion 24, and the right connecting pin 27 is withdrawn from the right second pin insertion hole 25A of the right boom foot portion 25. In consequence, the arrangement provided is such that the left and right boom foot portions 24 and 25 can be disconnected from the left and right boom brackets 22 and 23.

Indicated at 40 is a stopper which is provided between the left boom bracket 22 and the right boom bracket 23. As shown in Fig. 8, this stopper 40 abuts against the left connecting pin 26 at a position where the left connecting pin 26 has been withdrawn from the left second pin insertion hole 24A of the left boom foot portion 24, and abuts against the right connecting pin 27 at a position where the right connecting pin 27 has been withdrawn from the second pin insertion hole 25A of the right boom foot portion 25. Here, as shown in Figs. 6 and 7, the stopper 40 is constituted by a pair of mounting plates 40A whose proximal end sides are secured to the opposing surface 22C of the left inner boom bracket 22A, and which extend in the left and right direction toward the right inner boom bracket 23A while opposing each other with the left link 31 located therebetween, and by a rectangular abutment plate 40B which is secured to a distal end portion of each mounting plate 40A.

Further, in case the hydraulic cylinder 29 is extended, the left connecting pin 26 is withdrawn from the left second pin insertion hole 24A, and the right connecting pin 27 is withdrawn from the right second pin insertion hole 25A. As a result, the below-described pin side engaging member 43 of the left connecting pin 26 and the below-described pin side engaging member 46 of the right connecting pin 27 respectively abut against the abutment plate 40B of the stopper 40 (see Fig. 8).

In consequence, the left connecting pin 26 is kept inserted in only the left first pin insertion hole 22D of the left inner boom bracket 22A, and the right connecting pin 27 is kept inserted in only the right first pin insertion hole 23D of the right inner boom bracket 23A. Accordingly, the pin inserting/withdrawing mechanism 28 is arranged to be held between the left inner boom bracket 22A and the right inner boom bracket 23A through the left and right connecting pins 26 and 27.

Indicated at 41 are left and right link rotation restricting members which are respectively provided on the left and right boom brackets 22 and 23, and these link rotation restricting members 41 are for restricting the floating link 30 of the pin inserting/withdrawing mechanism 28 from rotating about the left and right connecting pins 26 and 27.

Here, the link rotation restricting members 41 each has a recessed groove portion 41A having a U-shaped cross-sectional shape, and are respectively secured to the opposing surface 22C of the left inner boom bracket 22A and the opposing surface 23C of the right inner boom bracket 23A by a means such as welding. Both the left and right end portions of this floating link 30 are constantly engaged with the recessed grove portions 41A of the link rotation restricting members 41 vertically movably. In consequence, the arrangement provided is such that the floating link 30 is restricted from rotating about the left and right connecting pins 26 and 27 by the link rotation restricting members 41.

Next, the left connecting pin rotation restricting mechanism 42 for preventing the left connecting pin 26 from relatively rotating with respect to the left boom bracket 22 will be explained.

Namely, designated at 42 is the left connecting pin rotation restricting mechanism provided between the left boom bracket 22 and the left connecting pin 26. This left connecting pin rotation restricting mechanism 42 is for restricting the left connecting pin 26 from rotating in a state of being inserted in the left first pin insertion hole 22D of the left boom bracket 22 and the left second pin insertion hole 24A of the left boom foot portion 24. Here, the left connecting pin rotation restricting mechanism 42 is largely constituted by the pin side engaging member 43 and the bracket side engaging member 44 which will be described below.

Indicated at 43 is the pin side engaging member provided on the left connecting pin 26. This pin side engaging member 43 is provided on that end portion 26A of the left connecting pin 26 which is located on the opposing surface 22C side of the left boom bracket 22, and extends in a direction of being spaced apart from the axis O - O of the left connecting pin 26. Here, the pin side engaging member 43 is a projecting member which is formed by using, for instance, a thick-walled plate, and is secured to the end portion 26A of the left connecting pin 26 by using a means such as welding. The pin side engaging member 43 is inserted into a recessed groove portion 44B of the below-described bracket side engaging member 44 when the left connecting pin 26 is inserted into the left first pin insertion hole 22D of the left boom bracket 22 and the left second pin insertion hole 24A of the left boom foot portion 24.

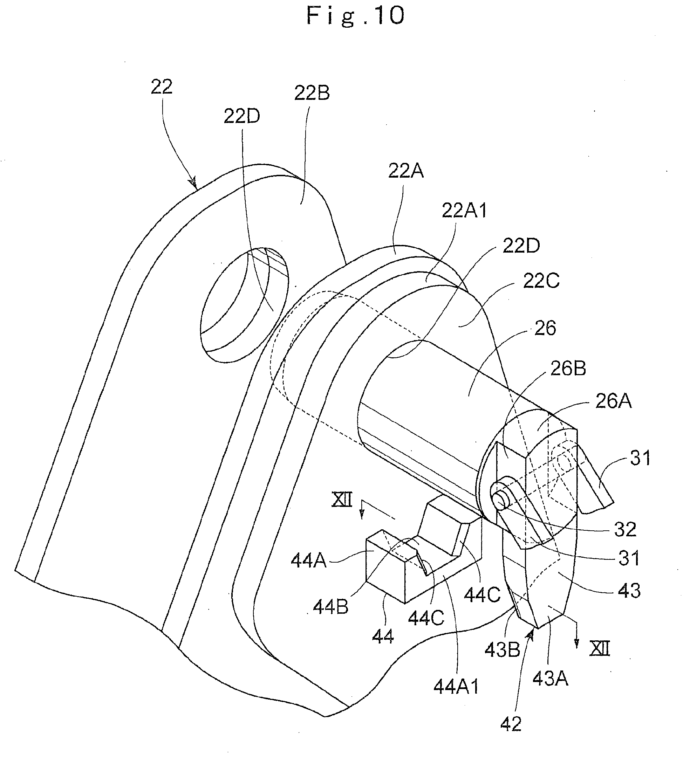

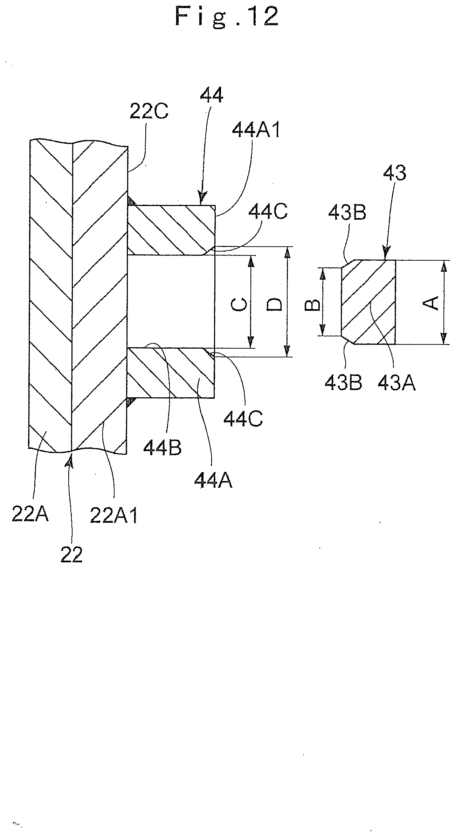

As shown in Fig. 10 and the like, a distal end portion 43A of the pin side engaging member 43 is formed in an inverse trapezoidal shape, and pair of tapered guide surfaces 43B are formed on those surfaces of this distal end portion 43A which oppose the bracket side engaging member 44. Namely, as shown in Fig. 12, if the width dimension of the distal end portion 43A of the pin side engaging member 43 is assumed to be A, the guide surfaces 43B are formed as tapered surfaces with a width dimension B therebetween which is smaller than the width dimension A.

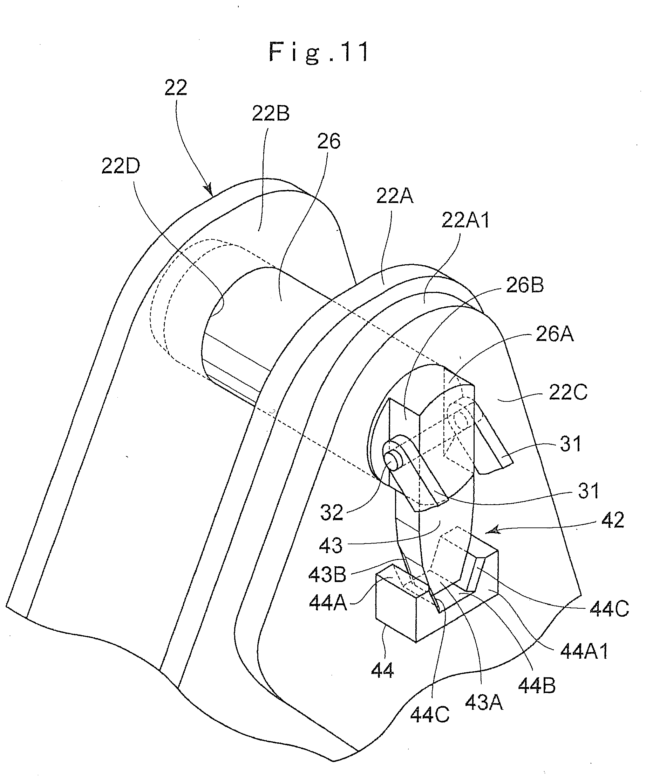

Indicated at 44 is the bracket side engaging member provided on the left boom bracket 22, and this bracket side engaging member 44 is disposed on the opposing surface 22C of the left boom bracket 22 at a position which is spaced apart from the axis O - O of the left connecting pin 26. As shown in Figs. 10 and 11, this bracket side engaging member 44 is formed as a substantially U-shaped block as a whole by, for example, notching a rectangular parallelepiped block into an inverse trapezoidal shape, and is disposed below the left connecting pin 26.

Here, the bracket side engaging member 44 is constituted by a U-shaped block 44A and the inverse trapezoidal recessed groove portion 44B which is provided on that surface of that block 44A which opposes the left connecting pin 26 in the vertical direction. The block 44A of this bracket side engaging member 44 has its proximal end side secured to the opposing surface 22C of the left inner boom bracket 22A by using a means such as welding, and a distal end portion 44A1 of the block 44A projects in the direction of the axis O - O of the left connecting pin 26.

The recessed groove portion 44B of the bracket side engaging member 44 is formed such that its mutually opposing inner surfaces are widened apart in a U- or V-shape. In addition, tapered guide surfaces 44C are formed on the recessed groove portion 44B at a position of the distal end portion 44A1 of the block 44A. These guide surfaces 44C are for guiding the pin side engaging member 43 into the recessed groove portion 44B of the bracket side engaging member 44.

Namely, as shown in Fig. 12, if the interval dimension between the inner surfaces of the recessed groove portion 44B is assumed to be C and the interval dimension between the guide surfaces 44C is assumed to be D, the interval dimension C between the inner surfaces of the recessed groove portion 44B is set to be greater than the width dimension A of the distal end portion 43A of the pin side engaging member 43 (C > A). Meanwhile, the guide surfaces 44C are formed as tapered surfaces with the interval dimension D therebetween which is greater than the interval dimension C.

Accordingly, when the left connecting pin 26 is inserted into the left first pin insertion hole 22D of the left boom bracket 22 and the left second pin insertion hole 24A of the left boom foot portion 24, the guide surfaces 43B of the pin side engaging member 43 provided on the left connecting pin 26 abut against the guide surfaces 44C provided on the recessed groove portion 44B of the bracket side engaging member 44. In consequence, the pin side engaging member 43 is smoothly guided into the recessed groove portion 44B of the bracket side engaging member 44.

Thus, when the left connecting pin 26 is inserted into the left first pin insertion hole 22D of the left boom bracket 22 and the left second pin insertion hole 24A of the left boom foot portion 24, the pin side engaging member 43 secured to the left connecting pin 26 is inserted into the recessed groove portion 44B of the bracket side engaging member 44 secured to the left inner boom bracket 22A. Consequently, the left connecting pin 26 is restricted from rotating with respect to the left boom bracket 22.

Next, the right connecting pin rotation restricting mechanism 45 for preventing the right connecting pin 27 from relatively rotating with respect to the right boom bracket 23 will be explained.

Namely, designated at 45 is the right connecting pin rotation restricting mechanism provided between the right boom bracket 23 and the right connecting pin 27. This right connecting pin rotation restricting mechanism 45 is also largely constituted by the pin side engaging member 46 and the bracket side engaging member 47 in the same way as the left connecting pin rotation restricting mechanism 42 (see Fig. 5).

Here, the pin side engaging member 46 is secured to that end portion 27A of the right connecting pin 27, which is located on the opposing surface 23C side of the right boom bracket 23, by using a means such as welding, and projects in a direction of being spaced apart from the axis O - O of the right connecting pin 27. A distal end portion 46A of the pin side engaging member 46 is formed in an inverse trapezoidal shape, and tapered guide surfaces 46B are formed on those surfaces of this distal end portion 46A which oppose the bracket side engaging member 47.

Meanwhile, the bracket side engaging member 47 is secured to the opposing surface 23C of the right boom bracket 23 at a position spaced apart from the axis O - O of the right connecting pin 27 by a means such as welding. This bracket side engaging member 47 is constituted by a U-shaped block 47A and an inverse trapezoidal recessed groove portion 47B which is provided on that surface of that block 47A which opposes the right connecting pin 27 in the vertical direction, and a distal end portion 47A1 of the block 47A projects in the direction of the axis O - O of the right connecting pin 27. In addition, tapered guide surfaces 47C are formed on the recessed groove portion 47B at a position of the distal end portion 47A1 of the block 47A.

Accordingly, when the right connecting pin 27 is inserted into the right first pin insertion hole 23D of the right boom bracket 23 and the right second pin insertion hole 25A of the right boom foot portion 25, the guide surfaces 46B of the pin side engaging member 46 provided on the right connecting pin 27 abut against the guide surfaces 47C provided on the recessed groove portion 47B of the bracket side engaging member 47. In consequence, the pin side engaging member 46 is smoothly guided into the recessed groove portion 47B of the bracket side engaging member 47.

Thus, when the right connecting pin 27 is inserted into the right first pin insertion hole 23D of the right boom bracket 23 and the right second pin insertion hole 25A of the right boom foot portion 25, the pin side engaging member 46 secured to the right connecting pin 27 is inserted into the recessed groove portion 47B of the bracket side engaging member 47 secured to the right inner boom bracket 23A. Consequently, the right connecting pin 27 is restricted from rotating with respect to the right boom bracket 23.

It should be noted that, in Fig. 6, retaining plates 48 are respectively detachably attached to distal end portions of the left and right connecting pins 26 and 27. One of these retaining plates 48 is bolted to the distal end portion of the left connecting pin 26 projecting from the left outer boom bracket 22B in a state in which the left boom bracket 22 and the left boom foot portion 24 are connected by the left connecting pin 26, so as to retain the left connecting pin 26 with respect to the left boom bracket 22 and the left boom foot portion 24. Meanwhile, the other retaining plate 48 is bolted to the distal end portion of the right connecting pin 27 projecting from the right outer boom bracket 23B in a state in which the right boom bracket 23 and the right boom foot portion 25 are connected by the right connecting pin 27, so as to retain the right connecting pin 27 with respect to the right boom bracket 23 and the right boom foot portion 25.

The device for connecting two members 21 in accordance with the first embodiment has the above-described configuration, and a boom connecting operation in which the lower boom 9 of the working mechanism 8 is connected to the revolving frame 4 of the hydraulic excavator 1 by using this device for connecting two members 21 will be explained.

First, the lower boom 9 is lifted by using a hydraulic crane or the like (not shown), and the left and right boom foot portions 24 and 25 of this lower boom 9 are disposed in the vicinities of the left and right boom brackets 22 and 23 provided on the revolving frame 4.

At this time, as shown in Fig. 8, the pin inserting/withdrawing mechanism 28 is such that, in the state in which the hydraulic cylinder 29 is extended, the left connecting pin 26 is inserted in the left first pin insertion hole 22D of the left inner boom bracket 22A, and the right connecting pin 27 is inserted in the right first pin insertion hole 23D of the right inner boom bracket 23A. In consequence, the pin inserting/withdrawing mechanism 28 is held between the left inner boom bracket 22A and the right inner boom bracket 23A through the left and right connecting pins 26 and 27.

Meanwhile, the pin side engaging member 43 secured to the end portion 26A of the left connecting pin 26 is at a position spaced apart from the bracket side engaging member 44 secured to the opposing surface 22C of the left boom bracket 22. The pin side engaging member 46 secured to the end portion 27A of the right connecting pin 27 is at a position spaced apart from the bracket side engaging member 47 secured to the opposing surface 23C of the right boom bracket 23.

Next, the left boom foot portion 24 of the lower boom 9 is inserted between the left inner boom bracket 22A and the left outer boom bracket 22B of the left boom bracket 22, and the right boom foot portion 25 of the lower boom 9 is inserted between the right inner boom bracket 23A and the right outer boom bracket 23B of the right boom bracket 23. Further, the second pin insertion holes 24A and 25A of the left and right boom foot portions 24 and 25 and the first pin insertion holes 22D and 23D of the left and right boom brackets 22 and 23 are aligned with each other on the identical axis O - O.

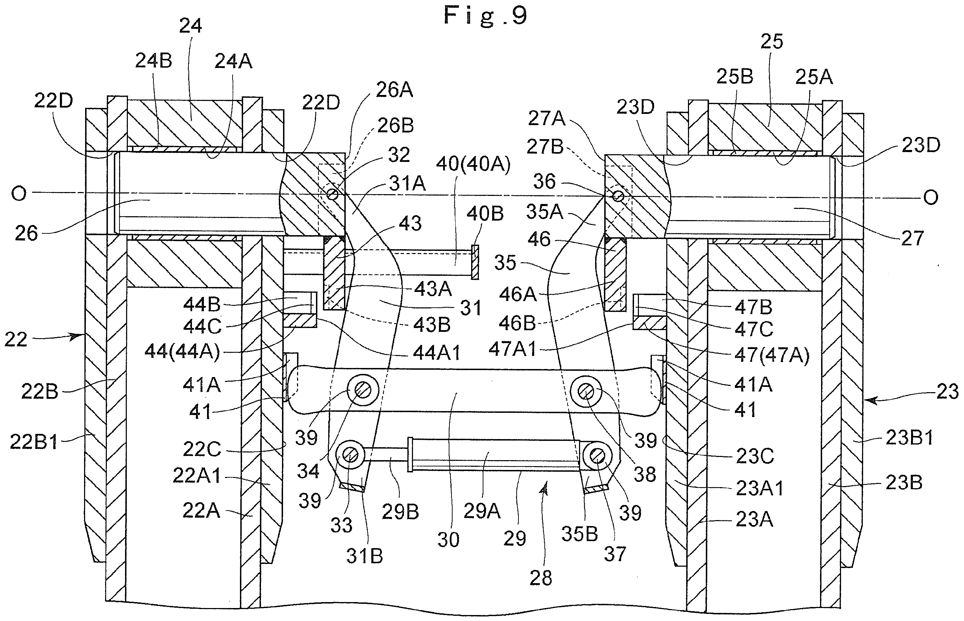

In this state, as shown in Fig. 9, as the hydraulic cylinder 29 of the pin inserting/withdrawing mechanism 28 is contracted, the left link 31 is rotated by using as a fulcrum the portion (position of the pin 34) where the left link 31 is connected to the floating link 30, and the right link 35 is rotated by using as a fulcrum the portion (position of the pin 38) where the right link 35 is connected to the floating link 30. In consequence, the left connecting pin 26 connected to the one end side 31A of the left link 31 is inserted into the left first pin insertion hole 22D of the left boom bracket 22 and the left second pin insertion hole 24A of the left boom foot portion 24, and the right connecting pin 27 connected to the one end side 35A of the right link 35 is inserted into the right first pin insertion hole 23D of the right boom bracket 23 and the right second pin insertion hole 25A of the right boom foot portion 25.

In this case, the distal end portion 43A of the pin side engaging member 43 secured to the left connecting pin 26 is inserted into the recessed groove portion 44B of the bracket side engaging member 44 secured to the opposing surface 22C of the left boom bracket 22. Also, the distal end portion 46A of the pin side engaging member 46 secured to the right connecting pin 27 is inserted into the recessed groove portion 47B of the bracket side engaging member 47 secured to the opposing surface 23C of the right boom bracket 23.

It should be noted that since the floating link 30 of the pin inserting/withdrawing mechanism 28 is constantly engaged with the link rotation restricting members 41 secured to the left and right inner boom brackets 22A and 23A, the left and right connecting pins 26 and 27 are restricted from rotating with respect to the left and right boom brackets 22 and 23. For this reason, the pin side engaging member 43 secured to the left connecting pin 26 and the bracket side engaging member 44 secured to the left boom bracket 22 are positioned in advance. Likewise, the pin side engaging member 46 secured to the right connecting pin 27 and the bracket side engaging member 47 secured to the right boom bracket 23 are positioned in advance.

Accordingly, when the hydraulic cylinder 29 is contracted, and the left connecting pin 26 is thereby inserted into the left first pin insertion hole 22D of the left boom bracket 22 and the left second pin insertion hole 24A of the left boom foot portion 24, the distal end portion 43A of the pin side engaging member 43 is reliably engaged with the recessed groove portion 44B of the bracket side engaging member 44. Likewise, when the right connecting pin 27 is inserted into the right first pin insertion hole 23D of the right boom bracket 23 and the right second pin insertion hole 25A of the right boom foot portion 25, the distal end portion 46A of the pin side engaging member 46 is reliably engaged with the recessed groove portion 47B of the bracket side engaging member 47.

Moreover, the tapered guide surfaces 43B are formed at the distal end portion 43A of the pin side engaging member 43 provided on the left connecting pin 26, and the tapered guide surfaces 44C are formed at the recessed groove portion 44B of the bracket side engaging member 44. For this reason, the guide surfaces 43B of the pin side engaging member 43 abut against the guide surfaces 44C of the bracket side engaging member 44, so that the pin side engaging member 43 is reliably guided into the recessed groove portion 44B of the bracket side engaging member 44.

Likewise, the tapered guide surfaces 46B are formed at the distal end portion 46A of the pin side engaging member 46 provided on the right connecting pin 27, and the tapered guide surfaces 47C are formed at the recessed groove portion 47B of the bracket side engaging member 47. For this reason, the guide surfaces 46B of the pin side engaging member 46 abut against the guide surfaces 47C of the bracket side engaging member 47, so that the pin side engaging member 46 is reliably guided into the recessed groove portion 47B of the bracket side engaging member 47.

Thus, as shown in Fig. 6, in the state in which the left boom bracket 22 and the left boom foot portion 24 are connected by the left connecting pin 26, the pin side engaging member 43 is inserted in the recessed groove portion 44B of the bracket side engaging member 44. For this reason, the left connecting pin 26 can be reliably restricted from rotating with respect to the left boom bracket 22. Similarly, in the state in which the right boom bracket 23 and the right boom foot portion 25 are connected by the right connecting pin 27, the pin side engaging member 46 is inserted in the recessed groove portion 47B of the bracket side engaging member 47, so that the right connecting pin 27 can be reliably restricted from rotating with respect to the right boom bracket 23.

As such, even if the lower boom 9 is rotated with respect to the revolving frame 4 in the state in which the left and right boom brackets 22 and 23 of the revolving frame 4 and the left and right boom foot portions 24 and 25 of the lower boom 9 are connected by using the left and right connecting pins 26 and 27, it is possible to restrict the left and right connecting pins 26 and 27 from rotating in conjunction with the rotation of the lower boom 9. As a result, it is possible to suppress early wear of the left and right connecting pins 26 and 27 and prolong the life of these connecting pins 26 and 27, thereby making it possible to enhance the reliability of the device for connecting two members 21.

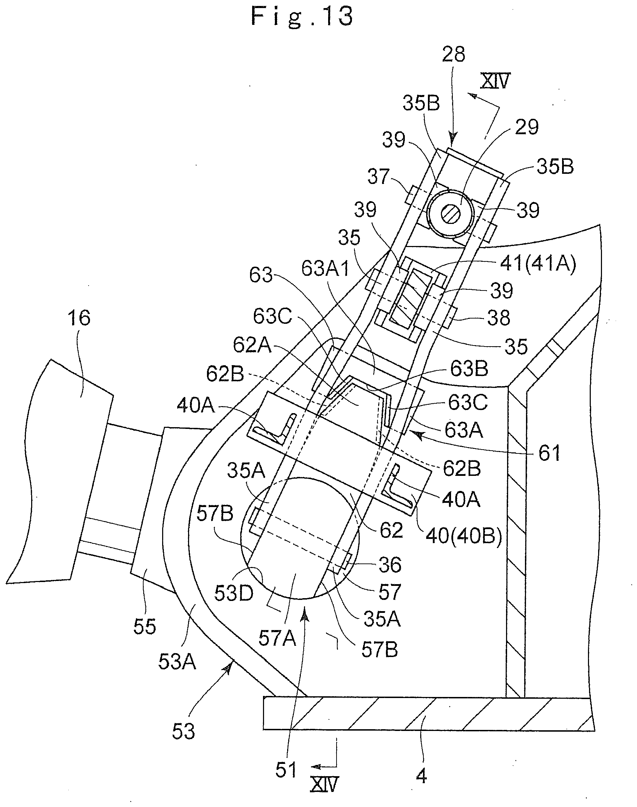

Next, Figs. 13 to 15 show a second embodiment of the present invention, and in this embodiment a device for connecting two members for connecting the revolving frame and boom cylinders of a hydraulic excavator is illustrated by way of example. It should be noted that, in the second embodiment, those component elements identical to those of the above-described first embodiment will be denoted by the same reference numerals, and a description thereof will be omitted.

In the drawings, designated at 51 is a device for connecting two members employed in this embodiment, and this device for connecting two members 51 connects the revolving frame 4 and the left and right boom cylinders 16. Namely, in the second embodiment, a case is illustrated in which the revolving frame 4 of the upper revolving structure 3 is applied as the first member, and the left and right boom cylinders 16 are applied as the second members.

Here, this device for connecting two members 51 is comprised of below-described left and right cylinder boom brackets 52 and 53; left and right first pin insertion holes 52D and 53D; left and right cylinder mounting eyes 54 and 55; left and right second pin insertion holes 54A and 55A; left and right connecting pins 56 and 57; the pin inserting/withdrawing mechanism 28; and left and right connecting pin rotation restricting mechanisms 58 and 61.

Designated at 52 is the left cylinder bracket serving as the left first bracket provided on the front end portion of the revolving frame 4. This left boom cylinder bracket 52 is constituted by a left inner cylinder bracket 52A and a left outer cylinder bracket 52B. A below-described bracket side engaging member 60 is provided on an opposing surface 52C of the left inner cylinder bracket 52A. Further, the left first pin insertion holes 52D, which penetrate in the left and right direction, are respectively bored in the left inner cylinder bracket 52A and the left outer cylinder bracket 52B.

Designated at 53 is the right cylinder bracket serving as the right first bracket provided on the front end portion of the revolving frame 4. This right cylinder bracket 53 is constituted by a right inner cylinder bracket 53A and a right outer cylinder bracket 53B. A below-described bracket side engaging member 63 is provided on an opposing surface 53C of the right inner cylinder bracket 53A. Further, the right first pin insertion holes 53D, which penetrate in the left and right direction, are respectively bored in the right inner cylinder bracket 53A and the right outer cylinder bracket 53B.

Designated at 54 is the left cylinder mounting eye provided on the left boom cylinder 16 and serving as the left second bracket. This left cylinder mounting eye 54 is formed as a substantially cylindrical boss and is disposed between the left inner cylinder bracket 52A and the left outer cylinder bracket 52B. In addition, the left second pin insertion hole 54A corresponding to the left first pin insertion hole 52D of the left cylinder bracket 52 is bored in the left cylinder mounting eye 54, and a cylindrical left bush 54B is insertingly fitted in the left second pin insertion hole 54A.

Designated at 55 is the right cylinder mounting eye provided on the right boom cylinder 16 and serving as the right second bracket. This right cylinder mounting eye 55 is formed as a substantially cylindrical boss and is disposed between the right inner cylinder bracket 53A and the right outer cylinder bracket 53B. In addition, the right second pin insertion hole 55A corresponding to the right first pin insertion hole 53D of the right cylinder bracket 53 is bored in the right cylinder mounting eye 55, and a cylindrical right bush 55B is insertingly fitted in the right second pin insertion hole 55A.

Indicated at 56 is the left connecting pin for connecting the left cylinder bracket 52 and the left cylinder mounting eye 54. This left connecting pin 56 is withdrawably inserted in the left first pin insertion hole 52D of the left cylinder bracket 52 and in the left bush 54B insertingly fitted in the left second pin insertion hole 54A of the left cylinder mounting eye 54. Further, a link mounting portion 56B, to which the left link 31 of the pin inserting/withdrawing mechanism 28 is mounted, and a below-described pin side engaging member 59 are provided at that end portion 56A of the left connecting pin 56 which is located on the opposing surface 52C side of the left cylinder bracket 52.

Indicated at 57 is the right connecting pin for connecting the right cylinder bracket 53 and the right cylinder mounting eye 55. This right connecting pin 57 is withdrawably inserted in the right first pin insertion hole 53D of the right cylinder bracket 53 and in the right bush 55B insertingly fitted in the right second pin insertion hole 55A of the right cylinder mounting eye 55. Further, a link mounting portion 57B, to which the right link 35 of the pin inserting/withdrawing mechanism 28 is mounted, and a below-described pin side engaging member 62 are provided at that end portion 57A of the right connecting pin 57 which is located on the opposing surface 53C side of the right cylinder bracket 53.

In this case, the left and right first pin insertion holes 52D and 53D bored in the left and right cylinder brackets 52 and 53 and the left and right second pin insertion holes 54A and 55A bored in the left and right cylinder mounting eyes 54 and 55, and the left and right connecting pins 56 and 57 are disposed on the identical axis O - O.

Next, the left connecting pin rotation restricting mechanism 58 and the right connecting pin rotation restricting mechanism 61 in accordance with the second embodiment will be explained.

Designated at 58 is the left connecting pin rotation restricting mechanism for preventing the relative rotation of the left connecting pin 56 with respect to the left cylinder bracket 52. This left connecting pin rotation restricting mechanism 58 is for restricting the left connecting pin 56 from rotating in a state of being inserted in the left first pin insertion hole 52D of the left cylinder bracket 52 and the left second pin insertion hole 54A of the left cylinder mounting eye 54.

The left connecting pin rotation restricting mechanism 58 in accordance with the second embodiment is largely constituted by the pin side engaging member 59 secured to the end portion 56A of the left connecting pin 56 and the bracket side engaging member 60 secured to the opposing surface 52C of the left cylinder bracket 52 in the same way as the left connecting pin rotation restricting mechanism 42 used in the first embodiment.

Here, the pin side engaging member 59 is secured to the end portion 56A of the left connecting pin 56, and projects in a direction of being spaced apart from the axis O - O of that left connecting pin 56. In addition, tapered guide surfaces 59B are formed at a distal end portion 59A of the pin side engaging member 59.

Meanwhile, the bracket side engaging member 60 is secured to the opposing surface 52C of the left cylinder bracket 52 at a position spaced apart from the axis O - O of the left connecting pin 56. This bracket side engaging member 60 is constituted by a U-shaped block 60A and a recessed groove portion 60B provided on the block 60A, and a distal end portion 60A1 of the block 60A projects in the direction of the axis O - O of the left connecting pin 56. In addition, tapered guide surfaces 60C are formed on the recessed groove portion 60B at a position of the distal end portion 60A1 of the block 60A.

Designated at 61 is the right connecting pin rotation restricting mechanism for preventing the relative rotation of the right connecting pin 57 with respect to the right cylinder bracket 53. This right connecting pin rotation restricting mechanism 61 is for restricting the right connecting pin 57 from rotating in a state of being inserted in the right first pin insertion hole 53D of the right cylinder bracket 53 and the right second pin insertion hole 55A of the right cylinder mounting eye 55.

The right connecting pin rotation restricting mechanism 61 in accordance with the second embodiment is largely constituted by the pin side engaging member 62 secured to the end portion 57A of the right connecting pin 57 and the bracket side engaging member 63 secured to the opposing surface 53C of the right cylinder bracket 53 in the same way as the right connecting pin rotation restricting mechanism 45 used in the first embodiment.

Here, the pin side engaging member 62 is secured to the end portion 57A of the right connecting pin 57, and projects in a direction of being spaced apart from the axis O - O of that right connecting pin 57. In addition, tapered guide surfaces 62B are formed at a distal end portion 62A of the pin side engaging member 62.

Meanwhile, the bracket side engaging member 63 is secured to the opposing surface 53C of the right cylinder bracket 53 at a position spaced apart from the axis O - O of the right connecting pin 57. This bracket side engaging member 63 is constituted by a U-shaped block 63A and a recessed groove portion 63B provided on the block 63A, and a distal end portion 63A1 of the block 63A projects in the direction of the axis O - O of the right connecting pin 57. In addition, tapered guide surfaces 63C are formed on the recessed groove portion 63B at a position of the distal end portion 63A1 of the block 63A.

The device for connecting two members 51 in accordance with the second embodiment has the above-described configuration, and a case in which the revolving frame 4 and the left and right boom cylinders 16 are connected by using this device for connecting two members 51 will be explained.

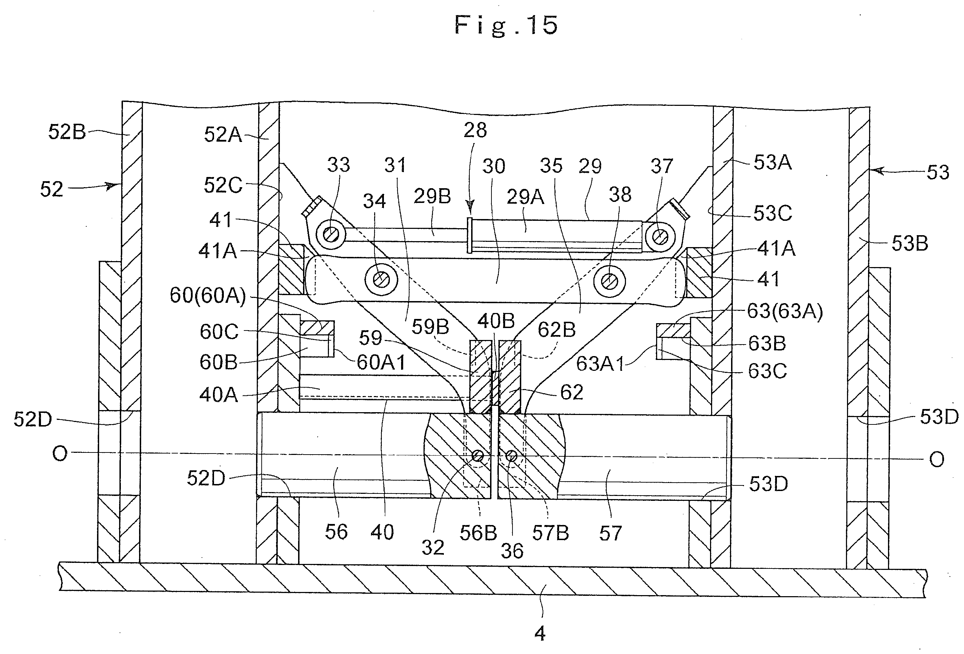

First, as shown in Fig. 15, in a state in which the hydraulic cylinder 29 of the pin inserting/withdrawing mechanism 28 is extended, the left cylinder mounting eye 54 is inserted between the left inner cylinder bracket 52A and the left outer cylinder bracket 52B. Similarly, the right cylinder mounting eye 55 is inserted between the right inner cylinder bracket 53A and the right outer cylinder bracket 53B.

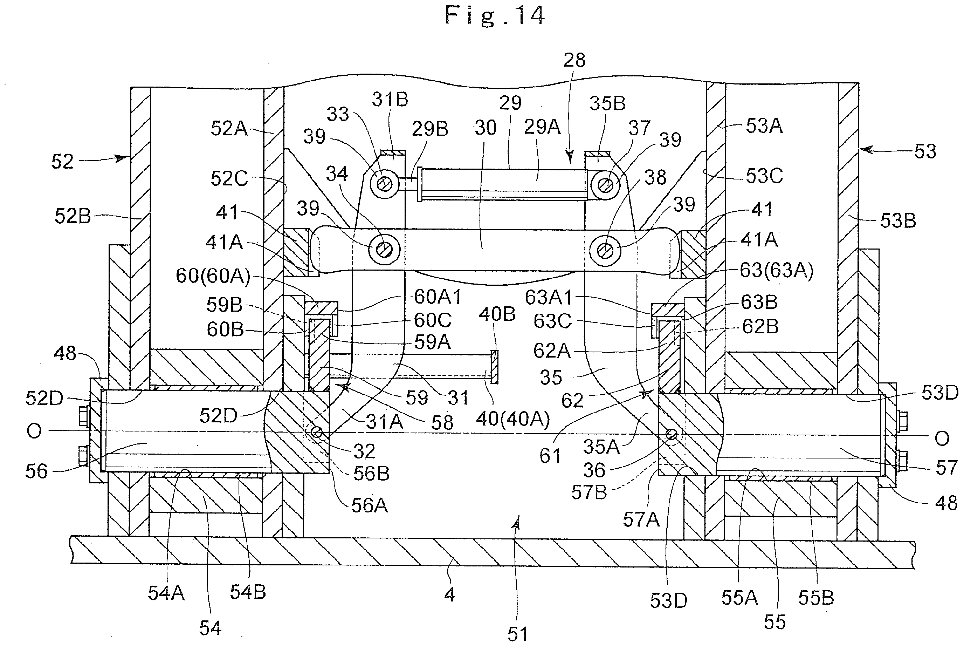

Next, as the hydraulic cylinder 29 of the pin inserting/withdrawing mechanism 28 is contracted, as shown in Fig. 14, the left connecting pin 56 connected to the left link 31 is inserted into the left first pin insertion hole 52D of the left cylinder bracket 52 and the left second pin insertion hole 54A of the left cylinder mounting eye 54. Also, the right connecting pin 57 connected to the right link 35 is inserted into the right first pin insertion hole 53D of the right cylinder bracket 53 and the right second pin insertion hole 55A of the right cylinder mounting eye 55.

In this case, the distal end portion 59A of the pin side engaging member 59 secured to the left connecting pin 56 is inserted into the recessed groove portion 60B of the bracket side engaging member 60 secured to the opposing surface 52C of the left cylinder bracket 52. Likewise, the distal end portion 62A of the pin side engaging member 62 secured to the right connecting pin 57 is inserted into the recessed groove portion 63B of the bracket side engaging member 63 secured to the opposing surface 53C of the right cylinder bracket 53.

Thus, in the state in which the left cylinder bracket 52 and the left cylinder mounting eye 54 are connected by the left connecting pin 56, the pin side engaging member 59 is inserted in the recessed groove portion 60B of the bracket side engaging member 60, with the result that the left connecting pin 56 is reliably restricted from rotating with respect to the left cylinder bracket 52. Similarly, in the state in which the right cylinder bracket 53 and the right cylinder mounting eye 55 are connected by the right connecting pin 57, the pin side engaging member 62 is inserted in the recessed groove portion 63B of the bracket side engaging member 63, so that the right connecting pin 57 is also reliably restricted from rotating with respect to the right cylinder bracket 53.

Accordingly, even if the left and right boom cylinders 16 are extended and contracted in the state in which the left and right cylinder brackets 52 and 53 of the revolving frame 4 and the cylinder mounting eyes 54 and 55 of the left and right boom cylinders 16 are connected by using the left and right connecting pins 56 and 57, it is possible to restrict the left and right connecting pins 56 and 57 from rotating in conjunction with the extending and contracting operation of these boom cylinders 16, thereby making it possible to prolong the life of these connecting pins 56 and 57.

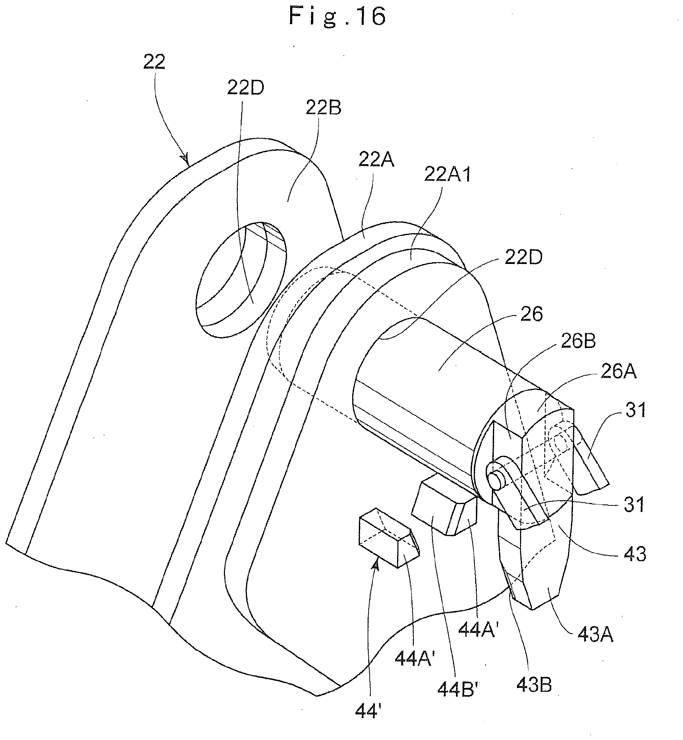

It should be noted that, in the above-described first embodiment, the case is illustrated in which the block 44A and the recessed groove portion 44B are integrally formed by notching the block 44A of the bracket side engaging member 44 secured to the left boom bracket 22. However, the present invention is not limited to the same, and, for example, as in a modification shown in Fig. 16, a bracket side engaging member 44' may be formed by two blocks 44A' respectively consisting of separate members. Namely, it is possible to adopt a configuration in which the two blocks 44A' are secured to the opposing surface 22C of the left boom bracket 22 with an interval provided therebetween, and a recessed groove portion 44B' is formed between these blocks 44A' . In this case as well, the pin side engaging member 43 can be inserted into the recessed groove portion 44B'.

This also applies to the recessed groove portion 47B of the bracket side engaging member 47 secured to the right boom bracket 23. Also, the same also applies to the recessed groove portions 60B and 63B of the bracket side engaging members 60 and 63 used in the second embodiment.

Further, in the above-described first embodiment, the case is illustrated in which the tapered guide surfaces 43B are provided on the distal end portion 43A of the pin side engaging member 43 for making up the left connecting pin rotation restricting mechanism 42, and the tapered guide surfaces 44C are provided on the recessed groove portion 44B of the bracket side engaging member 44. However, the present invention is not limited to the same, and, for example, tapered guide surfaces may be arranged to be provided on either one of the distal end portion 43A of the pin side engaging member 43 and the recessed groove portion 44B of the bracket side engaging member 44.

This also applies to the pin side engaging member 46 and the bracket side engaging member 47 for making up the right connecting pin rotation restricting mechanism 45. Also, the same also applies to the pin side engaging member 59 and the bracket side engaging member 60 for making up the left connecting pin rotation restricting mechanism 58 and the pin side engaging member 62 and the bracket side engaging member 63 for making up the right connecting pin rotation restricting mechanism 61 used in the second embodiment.

Furthermore, in the above-described first embodiment, the case is illustrated in which the revolving frame 4 and the lower boom 9 are connected by using the device for connecting two members 51, and, in the second embodiment, the case is illustrated in which the revolving frame 4 and the left and right boom cylinders 16 are connected by using the device for connecting two members 51. However, the present invention is not limited to the same, and is widely applicable to two members which are connected mutually rotatably, such as the upper boom 11 and the middle arm 12, and the middle arm 12 and the lower arm 13.

### DESCRIPTION OF REFERENCE NUMERALS

4: Revolving frame (First member)
9: Lower boom (Second member)
16: Boom cylinder (Second member)
21, 51: Device for connecting two members
22: Left boom bracket (Left first bracket)
22C, 23C, 52C, 53C: Opposing surface
22D, 52D: Left first pin insertion hole
23: Right boom bracket (Right first bracket)
23D, 53D: Right first pin insertion hole
24: Left boom foot portion (Left second bracket)
24A, 54A: Left second pin insertion hole
25: Right boom foot portion (Right second bracket)
25A, 55A: Right second pin insertion hole
26, 56: Left connecting pin
26A, 27A, 56A, 57A: End portion
27, 57: Right connecting pin
28: Pin inserting/withdrawing mechanism
29: Hydraulic cylinder
30: Floating link
31: Left link
35: Right link
42, 58: Left connecting pin rotation restricting mechanism
43, 46, 59, 62: Pin side engaging member
43A, 46A, 59A, 62A: Distal end portion
43B, 46B, 59B, 62B: Guide surface
44, 47, 60, 63: Bracket side engaging member
44A, 47A, 60A, 63A, 44A': Block
44B, 47B, 60B, 63B, 44B': Recessed groove portion
44C, 47C, 60C, 63C: Guide surface
45, 61: Right connecting pin rotation restricting mechanism
52: Left cylinder bracket (Left first bracket)
53: Right cylinder bracket (Right first bracket)
54: Left cylinder mounting eye (Left second bracket) 55: Right cylinder mounting eye (Right second bracket)

## Claims

1. A device for connecting two members comprising:
left and right first brackets (22, 23, 52, 53) provided on a first member (4) in such a manner as to oppose each other in a left and right direction;
left and right first pin insertion holes (22D, 23D, 52D, 53D) which are respectively provided in said left and right first brackets (22, 23, 52, 53) ;
left and right second brackets (24, 25, 54, 55) which are provided on a second member (9, 16) which is connected to said first member (4) and respectively oppose said left and right first brackets (22, 23, 52, 53);
left and right second pin insertion holes (24A, 25A, 54A, 55A) which are respectively provided in said left and right second brackets (24, 25, 54, 55) and can be aligned with said first pin insertion holes (22D, 23D, 52D, 53D) on an identical axis (O-O);
a left connecting pin (26, 56) which is insertable in said left first pin insertion hole (22D, 52D) and said left second pin insertion hole (24A, 54A);
a right connecting pin (27, 57) which is insertable in said right first pin insertion hole (23D, 53D) and said right second pin insertion hole (25A, 55A); and
a pin inserting/withdrawing mechanism (28) which is disposed between said left and right first brackets (22, 23, 52, 53), and which inserts or withdraws said left connecting pin (26, 56) with respect to said left first pin insertion hole (22D, 52D) and said left second pin insertion hole (24A, 54A) and inserts or withdraws said right connecting pin (27, 57) with respect to said right first pin insertion hole (23D, 53D) and said right second pin insertion hole (25A, 55A),
wherein left and right connecting pin rotation restricting mechanisms (42, 45, 58, 61) for restricting said left connecting pin (26, 56) from rotating in a state of being inserted in said left first pin insertion hole (22D, 52D) and said left second pin insertion hole (24A, 54A) and for restricting said right connecting pin (27, 57) from rotating in a state of being inserted in said right first pin insertion hole (23D, 53D) and said right second pin insertion hole (25A, 55A) are respectively provided between said left and right first brackets (22, 23, 52, 53) and said left and right connecting pins (26, 27, 56, 57),
said pin inserting/withdrawing mechanism (28) includes a hydraulic cylinder (29) disposed at a position spaced apart from a position of the axis of said left and right connecting pins (26, 27, 56, 57) so as to be capable of extending and contracting; a floating link (30) disposed at a position spaced apart in a same direction as said hydraulic cylinder (29) from the position of the axis of said left and right connecting pins (26, 27, 56, 57) and in a floating state of being movable at least in a direction perpendicular to the axis of said left and right connecting pins (26, 27, 56, 57); a left link (31) for rotatably connecting said left connecting pin (26, 56) and said hydraulic cylinder (29) through said floating link (30), respectively; and a right link (35) for rotatably connecting said right connecting pin (27, 57) and said hydraulic cylinder (29) through said floating link (30), respectively, and
said pin inserting/withdrawing mechanism (28) is adapted to connect or disconnect said left and right first brackets (22, 23, 52, 53) and said second brackets (24, 25, 54, 55) by said left and right connecting pins (26, 27, 56, 57) through said left and right links (31, 35) in correspondence with an extended state or a contracted state of said hydraulic cylinder (29) **characterized in that**
said left and right connecting pin rotation restricting mechanisms (42, 45, 58, 61) are constituted by pin side engaging members (43, 46, 59, 62) which are respectively provided on said left and right connecting pins (26, 27, 56, 57) by being located on sides of those opposing surfaces (22C, 23C, 52C, 53C) of said left and right first brackets (22, 23, 52, 53) which oppose each other, said pin side engaging members (43, 46, 59, 62) extending in a direction of being spaced apart from the axis (O - O) of said connecting pins (26, 27, 56, 57); and,
bracket side engaging members (44, 47, 60, 63) which are respectively provided on said opposing surfaces (22C, 23C, 52C, 53C) of said left and right first brackets (22, 23, 52, 53) at a position spaced apart from the axis (0 - O) of said connecting pins (26, 27, 56, 57), and with which said pin side engaging members (43, 46, 59, 62) are engaged when said connecting pins (26, 27, 56, 57) are each inserted into said first pin insertion hole (22D, 23D, 52D, 53D) and said second pin insertion hole (24A) . 25A, 54A, 55A).

2. The device for connecting two members according to claim 1, wherein said pin side engaging members (43, 46, 59, 62) are projecting members which project in the direction of being spaced apart from the axis (O - O) of said connecting pins (26, 27, 56, 57), and
said bracket side engaging members (44, 47, 60, 63) are configured as blocks each having a recessed groove portion (44B, 47B, 60B, 63B, 44B') for inserting a distal end portion (43A, 46A, 59A, 62A) of said pin side engaging member (43, 46, 59, 62) thereinto.

3. The device for connecting two members according to claim 2, wherein a tapered guide surface (43B, 46B, 59B, 62B, 44C, 47C, 60C, 63C) for guiding said distal end portion (43A, 46A, 59A, 62A) of each of said pin side engaging members (43, 46, 59, 62) into said recessed groove portion (44B, 47B, 60B, 63B, 44B') when each of said connecting pins (26, 27, 56, 57) is inserted into said first pin insertion holes (22D, 23D, 52D, 53D) and said second pin insertion holes (24A, 25A, 54A, 55A) is arranged to be provided on at least one side of said distal end portion (43A, 46A, 59A, 62A) of said pin side engaging member (43, 46, 59, 62) and said recessed groove portion (44B, 47B, 60B, 63B, 44B').

4. The device for connecting two members according to claim 1, wherein a stopper (40) against which said left connecting pin (26, 56) abuts at a position where said left connecting pin (26, 56) has been withdrawn from said left second pin insertion hole (24A, 54A) and against which said right connecting pin (27, 57) abuts at a position where said right connecting pin (27, 57) has been withdrawn from said right second pin insertion hole (25A, 55A) is arranged to be provided between said left and right first brackets (22, 23, 52, 53).

## Patentansprüche

1. Einrichtung, um zwei Elemente zu verbinden, die Folgendes umfasst:
einen linken und einen rechten ersten Haltebügel (22, 23, 52, 53), die an einem ersten Element (4) derart vorgesehen sind, dass sie einander in einer Links-/Rechtsrichtung gegenüberliegen;
ein linkes und ein rechtes erstes Bolzeneinsetzloch (22D, 23D, 52D, 53D), die entsprechend in dem linken und dem rechten ersten Haltebügel (22, 23, 52, 53) vorgesehen sind;
einen linken und einen rechten zweiten Haltebügel (24, 25, 54, 55), die an einem zweiten Element (9, 16), das mit dem ersten Element (4) verbunden ist, vorgesehen sind und dem linken bzw. dem rechten ersten Haltebügel (22, 23, 52, 53) gegenüberliegen;
ein linkes und ein rechtes zweites Bolzeneinsetzloch (24A, 25A, 54A, 55A), die in dem linken bzw. dem rechten zweiten Haltebügel (24, 25, 54, 55) vorgesehen sind und auf die ersten Bolzeneinsetzlöcher (22D, 23D, 52D, 53D) auf einer gleichen Achse (O-O) ausgerichtet werden können;
einen linken Verbindungsbolzen (26, 56), der in das linke erste Bolzeneinsetzloch (22D, 52D) und in das linke zweite Bolzeneinsetzloch (24A, 54A) eingesetzt werden kann;
einen rechten Verbindungsbolzen (27, 57), der in das rechte erste Bolzeneinsetzloch (23D, 53D) und in das rechte zweite Bolzeneinsetzloch (25A, 55A) eingesetzt werden kann; und
einen Bolzeneinsetz-/Bolzenentnahmemechanismus (28), der zwischen dem linken und dem rechten ersten Haltebügel (22, 23, 52, 53) angeordnet ist und den linken Verbindungsbolzen (26, 56) in Bezug auf das linke erste Bolzeneinsetzloch (22D, 52D) und das linke zweite Bolzeneinsetzloch (24A, 54A) einsetzt oder entnimmt und den rechten Verbindungsbolzen (27, 57) in Bezug auf das rechte erste Bolzeneinsetzloch (23D, 53D) und das rechte zweite Bolzeneinsetzloch (25A, 55A) einsetzt oder entnimmt,
wobei ein linker und ein rechter Verbindungsbolzendrehbeschränkungs-Mechanismus (42, 45, 58, 61) zum Beschränken einer Drehung des linken Verbindungsbolzens (26, 56) in einem Zustand, in dem er in das linke erste Bolzeneinsetzloch (22D, 52D) und das linke zweite Bolzeneinsetzloch (24A, 54A) eingesetzt ist, und zum Beschränken einer Drehung des rechten Verbindungsbolzens (27, 57) in einem Zustand, in dem er in das rechte erste Bolzeneinsetzloch (23D, 53D) und das rechte zweite Bolzeneinsetzloch (25A, 55A) eingesetzt ist, zwischen dem linken bzw. dem rechten ersten Haltebügel (22, 23, 52, 53) und dem linken und dem rechten Verbindungsbolzen (26, 27, 56, 57) vorgesehen sind,
der Bolzeneinsetz-/Bolzenentnahmemechanismus (28) einen Hydraulikzylinder (29), der bei einer von einer Position der Achse des linken und des rechten Verbindungsbolzens (26, 27, 56, 57) beabstandeten Position derart angeordnet ist, dass er sich erweitern und zusammenziehen kann; eine schwebende Verbindung (30), die bei einer in derselben Richtung wie der Hydraulikzylinder (29) von der Position der Achse der linken und rechten Verbindungsbolzen (26, 27, 56, 57) beabstandeten Position und in einem schwebenden Zustand, in dem sie mindestens in einer Richtung senkrecht zur Achse des linken und des rechten Verbindungsbolzens (26, 27, 56, 57) beweglich ist, angeordnet ist; eine linke Verbindung (31), um den linken Verbindungsbolzen (26, 56) und den Hydraulikzylinder (29) durch die schwebende Verbindung (30) drehbar entsprechend zu verbinden; und eine rechte Verbindung (35), um den rechten Verbindungsbolzen (27, 57) und den Hydraulikzylinder (29) durch die schwebende Verbindung (30) drehbar entsprechend zu verbinden, enthält und
der Bolzeneinsetz-/Bolzenentnahmemechanismus (28) ausgelegt ist, die linken und rechten ersten Haltebügel (22, 23, 52, 53) und die zweiten Haltebügel (24, 25, 54, 55) durch den linken und den rechten Verbindungsbolzen (26, 27, 56, 57) über die linke und die rechte Verbindung (31, 35) in Übereinstimmung mit einem erweiterten Zustand oder einem zusammengezogenen Zustand des Hydraulikzylinders (29) zu verbinden oder zu trennen, **dadurch gekennzeichnet, dass**
der linke und der rechte Verbindungsbolzendrehbeschränkungs-Mechanismen (42, 45, 58, 61) durch bolzenseitige Eingriffelemente (43, 46, 59, 62), die an dem linken bzw. dem rechten Verbindungsbolzen (26, 27, 56, 57) ausgebildet sind, indem sie sich an den Seiten der gegenüberliegenden Oberflächen (22C, 23C, 52C, 53C) des linken und des rechten ersten Haltebügels (22, 23, 52, 53), die einander gegenüberliegen, befinden, wobei die bolzenseitigen Eingriffelemente (43, 46, 59, 62) in einer Richtung, in der sie von der Achse (O-O) der Verbindungsbolzen (26, 27, 56, 57) beabstandet sind, verlaufen; und
haltebügelseitige Eingriffelemente (44, 47, 60, 63), die an den gegenüberliegenden Flächen (22C, 23C, 52C, 53C) des linken bzw. des rechten ersten Haltebügels (22, 23, 52, 53) bei einer Position, die von der Achse (O-O) der Verbindungsbolzen (26, 27, 56, 57) beabstandet ist, vorgesehen sind und mit denen die bolzenseitigen Eingriffelemente (43, 46, 59, 62) in Eingriff sind, wenn die Verbindungsbolzen (26, 27, 56, 57) in die erste Bolzeneinsetzöffnung (22D, 23D, 52D, 53D) bzw. in die zweite Bolzeneinsetzöffnung (24A, 25A, 54A, 55A) eingesetzt sind.

2. Einrichtung, um zwei Elemente zu verbinden, nach Anspruch 1, wobei die bolzenseitigen Eingriffelemente (43, 46, 59, 62) vorstehende Element sind, die in die Richtung in der sie von der Achse (O-O) der Verbindungsbolzen (26, 27, 56, 57) beabstandet sind, vorstehen, und
die haltebügelseitigen Eingriffelemente (44, 47, 60, 63) als Blöcke konfiguriert sind, die jeweils einen Vertiefungsnutabschnitt (44B, 47B, 60B, 63B, 44B') zum Einsetzen eines distalen Endabschnitts (43A, 46A, 59A, 62) des bolzenseitigen Eingriffelements (43, 46, 59, 62) in sie besitzen.

3. Einrichtung, um zwei Elemente zu verbinden, nach Anspruch 2, wobei eine konische Führungsfläche (43B, 46B, 59B, 62B, 44C, 47C, 60C, 63C), um den distalen Endabschnitt (43A, 46A, 59A, 62A) jedes der bolzenseitigen Eingriffelemente (43, 46, 59, 62) in den Vertiefungsnutabschnitt (44B, 47B, 60B, 63B, 44B') zu führen, wenn jeder der Verbindungsbolzen (26, 27, 56, 57) in die ersten Bolzeneinsetzöffnungen (22D, 23D, 52D, 53D) und die zweiten Bolzeneinsetzöffnungen (24A, 25A, 54A, 55A) eingesetzt ist, derart angeordnet ist, dass sie auf mindestens einer Seite des distalen Endabschnitts (43A, 46A, 59A, 62A) des bolzenseitigen Eingriffelements (43, 46, 59, 62) und des Vertiefungsnutabschnitts (44B, 47B, 60B, 63B, 44B') vorgesehen ist.

4. Einrichtung, um zwei Elemente zu verbinden, nach Anspruch 1, wobei ein Verschluss (40), an den der linke Verbindungsbolzen (26, 56) bei einer Position, an der der linke Verbindungsbolzen (26, 56) aus dem linken zweiten Bolzeneinsetzloch (24A, 54A) zurückgezogen worden ist, anliegt und an den der rechte Verbindungsbolzen (27, 57) bei einer Position, an der der rechte Verbindungsbolzen (27, 57) aus dem rechten zweiten Bolzeneinsetzloch (25A, 55A) zurückgezogen worden ist, anliegt, ausgelegt ist, zwischen dem linken und dem rechten ersten Haltebügel (22, 23, 52, 53) vorgesehen zu sein.

## Revendications

1. Dispositif pour relier deux éléments, comprenant :
des premières montures de gauche et de droite (22, 23, 52, 53) prévues sur un premier élément (4) de manière à être opposées l'une à l'autre dans une direction gauche/droite ;
des premiers trous d'insertion de broches à gauche et à droite (22D, 23D, 52D, 53D) qui sont respectivement prévus dans lesdites premières montures de gauche et de droite (22, 23, 52, 53) ;
des secondes montures de gauche et de droite (24, 25, 54, 55) qui sont prévues sur un second élément (9, 16) qui est relié audit premier élément (4) et qui sont respectivement opposées auxdites premières montures de gauche et de droite (22, 23, 52, 53) ;
des seconds trous d'insertion de broches à gauche et à droite (24A, 25A, 54A, 55A) qui sont respectivement prévus dans lesdites secondes montures de gauche et de droite (24, 25, 54, 55) et qui peuvent être alignés avec lesdits premiers trous d'insertion de broches (22D, 23D, 52D, 53D) sur un axe identique (O-O) ;
une broche de liaison de gauche (26, 56) qui est susceptible d'être insérée dans ledit premier trou d'insertion de broche à gauche (22D, 52D) et dans ledit second trou d'insertion de broche à gauche (24A, 54A) ;
une broche de liaison de droite (27, 57) qui est susceptible d'être insérée dans ledit premier trou d'insertion de broche à droite (23D, 53D) et dans ledit second trou d'insertion de broche à droite (25A, 55A) ; et
un mécanisme d'insertion/extraction de broche (28) qui est disposé entre lesdites premières montures de gauche et de droite (22, 23, 52, 53), et qui insère ou qui extrait ladite broche de liaison de gauche (26, 56) par rapport audit premier trou d'insertion de broche à gauche (22D, 52D) et audit second trou d'insertion de broche à gauche (24A, 54A), et qui insère ou qui extrait ladite broche de connexion de droite (27, 57) par rapport audit premier trou d'insertion de broche à droite (23D, 53D) et audit second trou d'insertion de broche à droite (25A, 55A),
dans lequel des mécanismes de restriction de rotation de broches de liaison à gauche et à droite (42, 45, 58, 61) destinés à restreindre ladite broche de liaison de gauche (26, 56) à l'encontre d'une rotation dans un état dans laquelle elle est insérée dans ledit premier trou d'insertion de broche à gauche (22D, 52D) et dans ledit second trou d'insertion de broche à gauche (24A, 54A) et à restreindre ladite broche de liaison de droite (27, 57) à l'encontre d'une rotation dans un état dans lequel elle est insérée dans ledit premier trou d'insertion de broche à droite (23D, 53D) et dans ledit second trou d'insertion de broche à droite (25A, 55A) sont respectivement prévus entre lesdites premières montures de gauche et de droite (22, 23, 52, 53) et lesdites broches de liaison de gauche et de droite (26, 27, 56, 57),
ledit mécanisme d'insertion/extraction de broche (28) inclut un vérin hydraulique (29) disposé à une position espacée d'une position de l'axe desdites broches de liaison de gauche et de droite (26, 27, 56, 57) de manière à être capable d'extension et de contraction ;
une liaison flottante (30) disposée à une position espacée dans la même direction que ledit vérin hydraulique (29) depuis la position de l'axe desdites broches de liaison de gauche et de droite (26, 27, 56, 57) et dans un état de flottement dans lequel elle est déplaçable au moins dans une direction perpendiculaire à l'axe desdites broches de liaison de gauche et de droite (26, 27, 56, 57) ; une liaison de gauche (31) destinée à relier avec faculté de rotation ladite broche de liaison de gauche (26, 56) et ledit vérin hydraulique (29) via ladite liaison flottante (30), respectivement ; et une liaison de droite (35) destinée à relier avec faculté de rotation ladite broche de liaison de droite (27, 57) et ledit vérin hydraulique (29) via ladite liaison flottante (30), respectivement, et
ledit mécanisme d'insertion/extraction de broche (28) est adapté à relier ou à détacher lesdites premières montures de gauche et de droite (22, 23, 52, 53) et lesdites secondes montures de gauche et de droite (24, 25, 54, 55) par lesdites broches de liaison de gauche et de droite (26, 27, 56, 57) via lesdites liaison de gauche et de droite (31, 35) en correspondante d'un état en extension ou d'un état en contraction dudit vérin hydraulique (29),
**caractérisé en ce que**
lesdits mécanismes de restriction de rotation de broche de liaison à gauche et à droite (42, 45, 58, 61) sont constitués par des éléments d'engagement côté broches (43, 46, 59, 62) qui sont respectivement prévus sur lesdites broches de liaison de gauche et de droite (26, 27, 56, 57) en étant situés sur les côtés de celles des surfaces opposées (22C, 23C, 52C, 53C) desdites premières montures de gauche et de droite (22, 23, 52, 53) qui sont opposés l'un à l'autre, lesdits éléments d'engagement côté broches (43, 46, 59, 62) s'étendant dans une direction où ils sont espacés de l'axe (O-O) desdites broches de liaison (26, 27, 56, 57) ; et
des éléments d'engagement côté montures (44, 47, 60, 63) qui sont respectivement prévus sur lesdites surfaces opposées (22C, 23C, 52C, 53C) desdites premières montures de gauche et de droite (22, 23, 52, 53) à une position espacée de l'axe (O-O) desdites broches de liaison (43, 46, 59, 62) et avec lesquels lesdits éléments d'engagement côté broches (43, 46 , 59, 62) sont engagés quand lesdites broches de liaison (26, 27, 56, 57) sont chacune insérées dans ledit premier trou d'insertion de broches (22D, 23D, 52D, 53D) et dans ledit second trou d'insertion de broches (24A, 25A, 54A, 55A).

2. Dispositif pour relier deux éléments selon la revendication 1, dans lequel lesdits éléments d'engagement côté broches (43, 46, 59, 62) sont des éléments en projection qui se projettent dans la direction qui les écarte depuis l'axe (O-O) desdites broches de liaison (26, 27, 56, 57), et
lesdits éléments d'engagement côté montures (44, 47, 60, 63) sont configurés comme des blocs ayant chacun une portion en rainure évidée (44B, 47B, 60B, 63B, 44B') pour insérer une portion d'extrémité distale (43A, 46A, 59A, 62A) dudit élément d'engagement côté broche (43, 46, 59, 62) dans celle-ci.

3. Dispositif pour relier deux éléments selon la revendication 2, dans lequel il est prévu une surface guide effilée (43B, 46B, 59B, 62B, 44C, 47C, 60C, 63C), pour guider ladite portion d'extrémité distale (43A, 46A, 59A, 62A) de chacun desdits éléments d'engagement côté broches (43, 46, 59, 62) dans ladite portion en rainure évidée (44B, 47B, 60B, 63B, 44B') quand chacune desdites broches de liaison (26, 27, 56, 57) est insérée dans lesdits premiers trous d'insertion de broches (22D, 23D, 52D, 53D) et lesdits seconds trous d'insertion de broches (24A, 25A, 54A, 55A), agencée sur au moins un côté de ladite portion d'extrémité distale (43A, 46A, 59A, 62A) dudit élément d'engagement côté broche (43, 46, 59, 62) et de ladite portion en rainure évidée (44B, 47B, 60B, 63B, 44B').

4. Dispositif pour relier deux éléments selon la revendication 1, dans lequel il est prévu un arrêt (40), contre lequel ladite broche de liaison de gauche (26, 56) vient buter à une position où ladite broche de liaison de gauche (26, 56) a été extraite hors dudit second trou d'insertion de broche à gauche (24A, 54A) et contre lequel ladite broche de liaison de droite (27, 57) vient buter à une position où ladite broche de liaison de droite (27, 57) a été extraite hors dudit second trou d'insertion de broche à droite (25A, 55A), agencé entre ladite première monture de gauche et ladite première monture de droite (22, 23, 52, 53).
